# EUROPEAN PATENT SPECIFICATION

(11) **EP 3 768 584 B1**
(45) Date of publication and mention of the grant of the patent: **04.08.2021**
(21) Application number: 19721041.2
(22) Date of filing: 19.03.2019
(51) Int. Cl.: G06Q 10/08, G06Q 20/12, G06Q 20/32, G07B 15/02, G07F 17/00, G06Q 30/06, G07C 9/00, B62H 5/14

(54) **SYSTEM AND METHOD TO CONTROL THE POSITION OF A PLURALITY OF SHARED VEHICLES IN A SERVICE AREA**
SYSTEM UND VERFAHREN ZUR STEUERUNG DER POSITION EINER VIELZAHL VON GEMEINSAM GENUTZTEN FAHRZEUGEN IN EINEM DIENSTBEREICH
SYSTÈME ET PROCÉDÉ POUR COMMANDER LA POSITION D'UNE PLURALITÉ DE VÉHICULES PARTAGÉS DANS UNE ZONE DE SERVICE

(30) Priority: 20.03.2018 IT 201800003768
(43) Date of publication of application: 27.01.2021
(73) Proprietor: ZEHUS S.p.A., 20124 Milano (IT)
(72) Inventor: LISANTI, Paolo, 20127 Milano (IT); BERRETTA, Daniele, 20127 Milano (IT)
(74) Representative: Penza, Giancarlo
(86) International application number: PCT/IB2019/052215
(87) International publication number: WO 2019/180609

(56) References cited:
- CN-A- 106 846 642
- CN-A- 106 898 135
- CN-A- 107 025 800
- CN-A- 107 481 514
- CN-A- 107 700 970
- CN-A- 107 730 874

## Description

### TECHNICAL FIELD OF THE INVENTION

The present invention generally relates to the field of vehicle sharing, such as, for example, bike sharing or electric motorvehicle sharing.

More in particular, the present invention concerns a system and a method to control the position of a plurality of shared vehicles that move in a service area.

### PRIOR ART

Bike sharing services, in which a user hires a bicycle for a given period (for example 10 minutes) in exchange for payment of a time-based charge, are known.

Bike sharing services are common above all in large cities and known examples are those provided by Ofo (www.ofo.com) and Mobike (mobike.com).

The shared bicycles can be parked in fixed stations provided with suitable racks, or a "free floating" of the bicycles is possible, where the latter can be parked at random on their kickstand in any part of the city (even far away from the fixed stations), such as, for example, on a sidewalk.

The Applicant has observed that, in the case of free-floating bike sharing, bicycles are parked indiscriminately in positions that impair the appearance of a city or even obstruct traffic in the city (for example, they obstruct the transit of people on sidewalks or the passage of a child's stroller): this obliges the provider of the bicycle hire service to continuously move bicycles into better positions, thus increasing the operating costs of the hire service and also increasing the emission of polluting gases caused by the use of a motor vehicle intended to load and move the bicycles.

Examples of such vehicle sharing systems are disclosed in documents CN 107 730 874 A, CN 106 898 135 A, CN 106 846 642 A, CN 107 481 514 A, CN 107 025 800 A and CN 107 700 970 A. The first document disclosing the features of the preamble of claim 1 and the steps of the method of claim 9 regardless the communication data-connection used as suggested by the invention.

The Applicant has further observed that another disadvantage of free-floating bike sharing is that users of the hire service are often unable to find a bicycle available in the desired position, such as, for example, near a railway station.

### SUMMARY OF THE INVENTION

The present invention relates to a system to control the position of a plurality of shared vehicles in a service area as defined in the enclosed claim 1 and by preferred embodiments thereof described in the dependent claims from 2 to 8.

The shared vehicle can be for example a bicycle, a motorcycle, an automobile or a two-wheels or four-wheels electric vehicle.

The Applicant has perceived that the control system in accordance with the present invention has the following advantages:
- it reduces indiscriminate parking of the shared vehicles, thus improving the city's appearance and decreasing the cases in which city traffic is obstructed;
- it increases the likelihood that the user of the hire service will find a shared vehicle available in the desired position;
- it facilitates the maintenance of shared vehicles;
- it reduces the costs of the shared vehicle hire service.

It is also an object of the present invention a method to control the position of a plurality of shared vehicles in a service area, wherein the control method is defined in the enclosed claim 9 and in the preferred embodiments described in the dependent claims 10 to 12.

The method to control the position of the shared vehicle is implemented by means of a computer program run in part on a processing unit of a central controller of the position of the vehicle, in part on a processing unit of a mobile electronic device (for example, a smartphone or a tablet) and in part on a processing unit mounted on the vehicle.

It is also an object of the present invention a computer program comprising software code portions adapted to perform the steps of the position control method as defined in the enclosed claim 13.

It is also an object of the present invention a non-transitory computer-readable storage medium comprising software code portions adapted to perform the steps of the position control method as defined in the enclosed claim 14.

### BRIEF DESCRIPTION OF THE DRAWINGS

Further characteristics and advantages of the invention will emerge from the following description of a preferred embodiment and variants thereof, said description being provided by way of example with reference to the attached drawings, wherein:
- Figure 1A shows a service area inside of which a plurality of shared bicycles according to the invention are authorized to move, wherein two virtual free-floating parking areas are present;
- Figure 1B shows a service area inside of which a plurality of shared bicycles according to the invention are authorized to move, wherein two virtual free-floating parking areas and two further main virtual parking areas are present;
- Figure 2 shows a block diagram of a system to control the position of a shared bicycle inside a service area according to the invention;
- Figure 3 shows a block diagram of an electro-mechanical device mounted in the hub of a shared bicycle according to the invention;
- Figures 4A-4C show the flow diagram of a method to control the position of a shared bicycle inside or outside a service area based on a first and a second embodiment of the invention, wherein said position control method is carried out on a processing unit of a central controller;
- Figures 5A-5C show the flow diagram of a method to control the blocking/unblocking of the movement of a shared bicycle inside or outside the service area according to the first and second embodiments of the invention, wherein said blocking/unblocking control method is carried out on a processing unit of an electro-mechanical device of a shared bicycle;
- Figure 6 shows the flow diagram of a method to control the hiring of a shared bicycle based on the first and second embodiments of the invention, wherein said control method hiring is carried out on a processing unit of a mobile electronic device;
- Figure 7A shows a first example of the messages exchanged over time in the system to control the position of the shared bicycle according to the second embodiment of the invention, in case wherein the shared bicycle leaves the service area and subsequently returns inside it;
- Figure 7B shows a second example of the messages exchanged over time in the system to control the position of the shared bicycle according to the second embodiment of the invention, in case wherein the cyclist attempts to park the shared bicycle inside the service area, but outside the virtual free-floating or main virtual parking areas;
- Figure 7C shows a third example of the messages exchanged over time in the system to control the position of the shared bicycle according to the second embodiment of the invention, in case wherein the cyclist successfully parks the shared bicycle inside a virtual free-floating parking area;
- Figure 7D shows a fourth example of the messages exchanged over time in the system to control the position of the shared bicycle according to the second embodiment of the invention, in case wherein the cyclist temporarily parks the bicycle inside the service area;
- Figure 8A shows a first example of the messages exchanged over time in the system to control the position of the shared bicycle according to a first embodiment of the invention, in case wherein the shared bicycle leaves the service area and subsequently returns inside it;
- Figure 8B shows a second example of the messages exchanged over time in the system to control the position of the shared bicycle according to the first embodiment of the invention, in case wherein the cyclist attempts to park the shared bicycle inside the service area, but outside the virtual free-floating or main virtual parking areas;
- Figure 8C shows a third example of the messages exchanged over time in the system to control the position of the shared bicycle according to the first embodiment of the invention, in case wherein the cyclist successfully parks the shared bicycle inside a virtual free-floating parking area;
- Figure 8D shows a fourth example of the messages exchanged over time in the system to control the position of the shared bicycle according to the first embodiment of the invention, in case wherein the cyclist temporarily parks the bicycle inside the service area.

### DETAILED DESCRIPTION OF THE INVENTION

It should be noted that in the description below, even if they appear in different embodiments of the invention, identical or similar blocks, components or modules are indicated by the same numerical references in the figures.

For the purposes of explaining the invention, a bike sharing service is considered (for example, bicycles of the electrically pedal assisted type), but the invention can also be applied to other types of vehicles such as, for example, motorcycles, electric scooters, automobiles, electric cars.

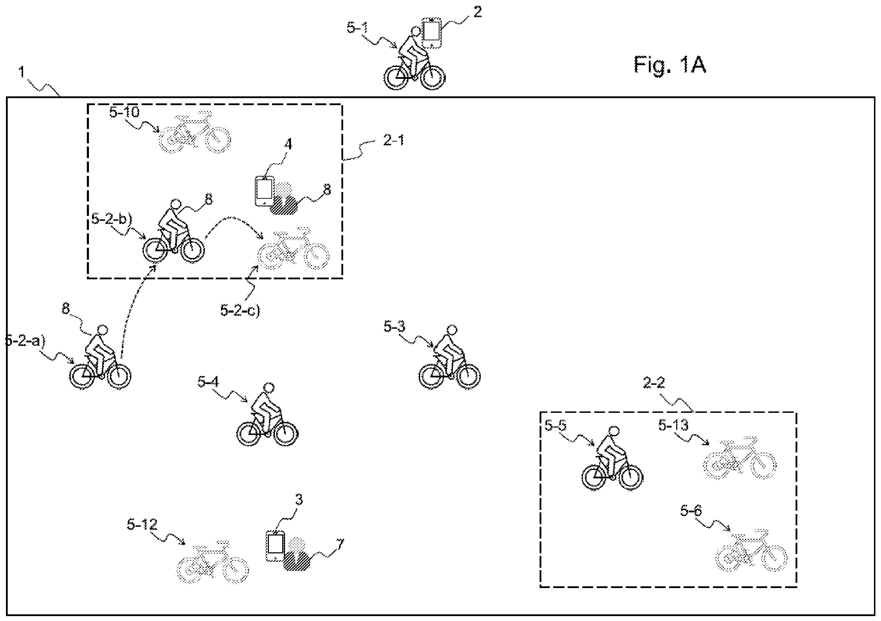

With reference to Figure 1A, it shows a service area 1 inside of which a plurality of shared bicycles (i.e. a fleet of bicycles) 5-2, 5-3, 5-4, 5-5, 5-6, 5-10, 5-11, 5-12, 5-13, 5-14, 5-15, 5-16, 5-17 are present and which are authorized to move.

The term "shared bicycle" (or "bike sharing") means that the bicycle can be hired, i.e. the bicycle can be used by a number of users at different times in exchange for payment of a sum for the time the bicycle was used for.

The same bicycle 5-2 is shown in three different possible positions a), b), c) indicated in Figure 1A by 5-2-a), 5-2-b), 5-2-c), respectively.

Each of the shared bicycles 5-2, 5-3, 5-4, 5-5, 5-6, 5-10, 5-11, 5-12, 5-13, 5-14, 5-15, 5-16, 5-17 comprises a respective means for blocking/unblocking the movement of the respective bicycle.

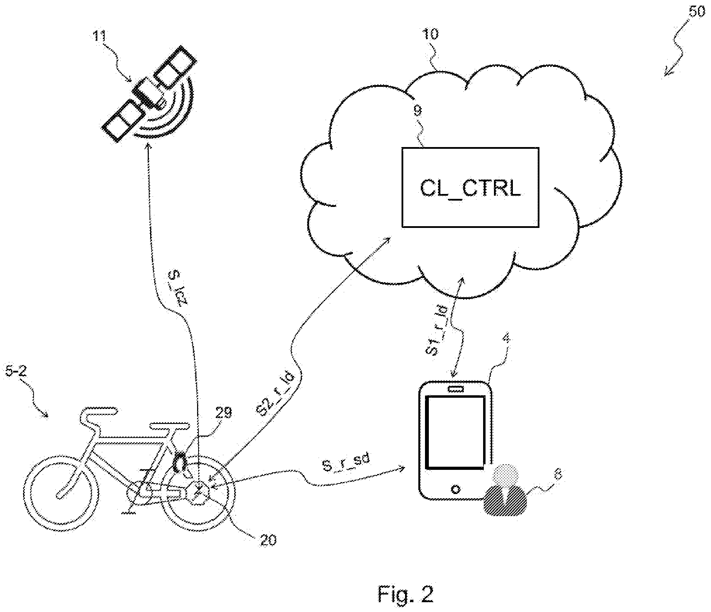

The means for blocking/unblocking of the movement of the bicycle can be of the electro-mechanical type, such as, for example, an electro-mechanical lock 29 mounted, for example, in proximity to the rear wheel (see Figure 2) and adapted to mechanically block or unblock the rotation of the rear wheel, as a function of a lock command signal S_lk; in this case the lock 29 is such to switch between a closed position, wherein it is such to block the rotation of the rear wheel of the respective bike (and thus block the movement of the respective bike), and an open position, wherein it is such to enable the rotation of the rear wheel of the respective bike (and thus unblock the movement of the respective bike).

Alternatively, the means for blocking/unblocking the movement of the bicycle can be of an electric type, such as, for example, an electric motor that is suitably controlled so as to act as an active or passive brake in order to block (or at least greatly slow down) the movement of the bicycle, as described in Italian patent application no. 102018000003359 filed on 8 March 2018 in the name of the same Applicant, and which is incorporated herein by reference.

Figure 1A further shows a bicycle 5-1 positioned outside the service area, wherein it is not authorized to move.

The term "service area" means a real, defined geographical area that is determined by means of a virtual boundary commonly indicated as a "geofence", wherein said virtual boundary is defined in electronic form by means of systems for tracking the geographical position, for example, a satellite system such as GPS (Global Positioning System).

The service area 1 can be, for example, one of the following:
- the geographical area occupied by a small or medium-sized city;
- the geographical area occupied by a portion of a large city;
- any geographical area having a limited extent.

The service area 1 comprises one or more virtual free-floating parking areas 2-1, 2-2 inside which the cyclist is authorized to park the bicycle at the end of the ride, i.e. is authorized to block the movement of the bicycle and thus stop the charging for the current hire ride: the bicycle is thus made available for hiring by another cyclist.

The virtual free-floating parking areas 2-1, 2-2 have, for example, a size of at least 1,000 square metres.

The cyclist can thus travel inside the service area 1 and (when he or she has ended the ride) enter one of the virtual free-floating parking areas 2-1, 2-2 and inside these he or she is authorized to park the bicycle, blocking the movement of the bicycle, for example by means of the electro-mechanical lock 29 adapted to block the rotation of the rear wheel of the bicycle or by means of the electric motor positioned in the hub of the rear wheel and adapted to function as a rear wheel brake.

For the purpose of explaining Figure 1A, it is considered that the blocking/unblocking means is the electro-mechanical lock 29 mounted in proximity to the rear wheel.

The virtual free-floating parking areas 2-1, 2-2 are real, defined geographical areas which are determined by means of respective virtual boundaries ("geofences"), wherein each virtual boundary is defined in electronic form by means of systems for tracking the geographical position, for example, of the GPS satellite type.

The service area 1 and the virtual free-floating parking areas 2-1, 2-2 are for example displayed on the screen of a mobile electronic device of the cyclist who is using a shared bicycle (for example, on a smartphone 4 of the cyclist 8 who is using the bicycle 5-2), by means of a suitable software application installed on the mobile electronic device of the cyclist and indicated hereinafter as "bike-sharing application".

In particular, Figure 1A shows that the cyclist 8 is travelling on the bicycle 5-2 inside the service area 1 and outside the virtual free-floating parking areas 2-1, 2-2, as indicated with the bicycle indicated by 5-2-a).

Subsequently, the cyclist 8 enters the virtual free-floating parking area 2-1 with the bicycle 5-2 (as indicated by the bicycle 5-2-b)), stops the bicycle 5-2 and decides to end the ride (as indicated by the bicycle 5-2-c)), then gets off the bicycle 5-2 and parks the bicycle 5-2 inside the virtual free-floating parking area 2-1 for example, by means of the kickstand thereof: the cyclist 8 blocks (by means of the bike-sharing application run on his or her smartphone 4) the movement of the bicycle 5-2 by means of the command for closing the lock 29 and the cyclist 8 stops being charged for the ride.

Figure 1A further shows two cyclists who are travelling on two respective bicycles 5-3, 5-4 positioned inside the service area 1 and outside the virtual free-floating parking areas 2-1, 2-2: the lock 29 of the bicycles 5-3, 5-4 is thus in the open position wherein it allows the rotation of the rear wheel of the respective bike and therefore the two cyclists can travel in the service area 1.

Figure 1A further shows a cyclist 7 who was taking a ride on the bicycle 5-12 inside the service area 1 and who has stopped in a position inside the service area 1, but outside the virtual free-floating parking areas 2-1, 2-2: in this case the cyclist 7 is not authorized to park the bicycle 5-12 permanently because the latter is positioned outside the virtual free-floating parking areas 2-1, 2-2; therefore, the cyclist 7 is not authorized to give a command for the definitive closure of the lock 29 and thus definitively block the rotation of the wheel of the bicycle 5-12, i.e. the cyclist 7 continues to be charged for the hire ride, even if the latter has stopped and got off the bicycle 5-12 and possibly moved away from it; it should be observed, however, that the cyclist 7 is authorized to temporarily park the bicycle 5-12 outside the virtual free-floating parking areas 2-1, 2-2, as will be illustrated in greater detail below.

Therefore, when the bicycle 5-12 is positioned inside the service area 1, but outside the virtual free-floating parking areas 2-1, 2-2, the cyclist 7 continues to be charged for the hire ride; the cyclist is thus obliged to reach one of the virtual free-floating parking areas 2-1, 2-2 and park inside them, in order to end the ride on the bicycle 5-12 and thus stop being charged for the hire ride.

The service area 1 and the virtual free-floating parking areas 2-1, 2-2 are also displayed on the screen of a mobile electronic device 3 of the cyclist 7 who is using or has used the bicycle 5-12.

The use of the virtual free-floating parking areas 2-1, 2-2 reduces the indiscriminate parking of bicycles inside the service area 1, since cyclists are obliged to park the bicycles inside the virtual free-floating parking areas 2-1, 2-2 to avoid paying penalties in terms of the hire charge or in terms of personal profiling; furthermore, the definitive blocking of the movement of the shared bicycles outside the virtual free-floating parking areas 2-1, 2-2 (for example, the bicycle 5-12) is inhibited, whereas the blocking of the movement of the shared bicycles is enabled inside the virtual free-floating parking areas 2-1, 2-2 (for example, the bicycles 5-10, 5-5, 5-6, 5-13).

Figure 1A further shows the bicycle 5-10, which is parked inside the virtual free-floating parking area 2-1: the lock 29 of the bicycle 5-10 is in the closed position, wherein it mechanically blocks the rotation of the rear wheel of the bicycle 5-10.

Similarly, the bicycles 5-6 and 5-13 are parked inside the virtual free-floating parking area 2-2: the lock 29 of the bicycle 5-6 and the lock 29 of the bicycle 5-13 are in the closed position, wherein they mechanically block the rotation of the rear wheel of the bicycles 5-6 and 5-13, respectively.

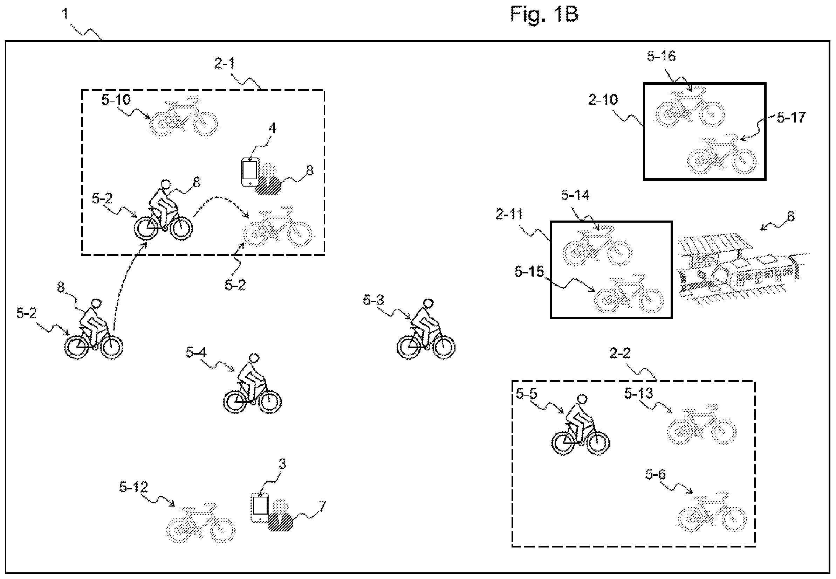

With reference to Figure 1B, it differs from Figure 1A in that it further includes the shared bicycles 5-14, 5-15, 5-16, 5-17 and two main virtual parking areas 2-10, 2-11, inside which the cyclist is authorized to park the shared bicycle at the end of the ride.

The main virtual parking areas 2-10, 2-11 are real, defined geographical areas which are determined by means of respective virtual perimeters ("geofences"), wherein each virtual perimeter is defined in electronic form by means of systems for tracking the geographical position, for example, GPS.

The main virtual parking areas 2-10, 2-11 have a much smaller size than the virtual free-floating parking areas 2-1, 2-2, for example, equal to about 100 square metres.

The main virtual parking areas 2-10, 2-11 preferably have a higher priority than the virtual free-floating parking areas 2-1, 2-2, i.e. the cyclist has an incentive to park inside them, as will be explained in greater detail below.

It should be observed that a main virtual parking area can be contained inside a virtual free-floating parking area.

The previous considerations regarding the virtual free-floating parking areas 2-1, 2-2 are similarly applicable to the main virtual parking areas 2-10, 2-11, i.e. inside the main virtual parking areas 2-10, 2-11 the cyclist can stop the bicycle and park it, by means of a command for blocking the lock 29 in the closed position, wherein the lock 29 blocks the rotation of the rear wheel of the bicycle.

The main virtual parking areas 2-10, 2-11 (in addition to the service area 1 and the virtual free-floating parking areas 2-1, 2-2) are for example, displayed on the screen of the mobile electronic device 4 (for example, a smartphone) of the cyclist 8 who is using or has used the bicycle 5-2 and on the screen of the mobile electronic device 3 of the cyclist 7 who has used the bicycle 5-12.

With reference to Figure 2, it shows a block diagram of a system 50 to control the position of a fleet of shared bicycles inside a service area 1 according to the invention.

The position control system 50 comprises the shared bicycle 5-2 provided with suitable means for blocking/unblocking means its movement (for example, the lock 29), a mobile electronic device 4 and a central controller 9 for controlling the position of the bicycle 5-2 ridden by a cyclist 8.

It should be observed that the invention is applicable more in general to the case where (in the place of the shared bicycle 5-2) a shared vehicle (for example, a motorcycle, an electric scooter or an automobile) is present and a suitable means for blocking the movement of the shared vehicle is present, for example, an electric motor functioning as a brake that blocks (or greatly slows) the movement of the shared vehicle.

Figure 2 further shows, with the reference number 11, a device for tracking the bicycle 5-2, in particular a satellite 11 which belongs to a network of satellites of the GPS satellite tracking system.

Alternatively, the geographical position of the bicycle 5-2 inside the service area 1 can be determined by means of tracking systems that use a mobile radio network, or by means of a combination of a satellite type and mobile radio type tracking system.

Alternatively, the geographical position of the bicycle 5-2 is determined by means of a combination of the data received by the satellite tracking device 24 mounted on the bicycle 5-2 and the data received by the satellite tracking device (for example, of the GPS type) installed inside the mobile electronic device 4 of the user 8, thus improving the accuracy of the estimate of the geographical position of the bicycle 5-2.

The position control system 50 is such to have four possible operating modes:
- a first operating mode (indicated below also as the first embodiment of the invention), wherein a long-distance data connection is available between the bicycle 5-2 and the central controller 9: in this case the bicycle 5-2 is able to exchange long-distance messages directly with the central controller 9, in order to appropriately manage the parking or temporary parking of the bicycle 5-2 and in order to control the presence of the bicycle 5-2 inside the service area 1;
- a second operating mode (indicated below also with second embodiment of the invention), wherein a long-distance data connection is not available between the bicycle 5-2 and the central controller 9, but a short-distance data connection is available between the bicycle 5-2 and the mobile electronic device 4 and a long-distance data connection is available between the mobile electronic device 4 and the central controller 9: in this case the bicycle 5-2 is not able to exchange long-distance messages directly with the central controller 9, so the bicycle 5-2 exchanges messages with the central controller 9 via the mobile electronic device 4, which thus also forwards towards the central controller 9 the messages received from the bicycle 5-2, in order to appropriately manage the parking or temporary parking of the bicycle 5-2 and in order to control the presence of the bicycle 5-2 inside the service area 1;

- a third operating mode, wherein a long-distance data connection is not available between the bicycle 5-2 and the central controller 9, and a long-distance data connection is not available between the mobile electronic device 4 and the central controller 9, but the short-distance data connection is available between the bicycle 5-2 and the mobile electronic device 4: in this case the bicycle 5-2 exchanges messages only with the mobile electronic device 4 by means of the short-distance data connection;
- a fourth operating mode, wherein a long-distance data connection is not available between the bicycle 5-2 and the central controller 9, a long-distance data connection is not available between the mobile electronic device 4 and the central controller 9, and a short-distance data connection is not available between the bicycle 5-2 and the mobile electronic device 4, for example, because the mobile electronic device 4 is off as its power supply battery is discharged.

The term "availability of a data connection", be it long-distance or short-distance, means that a reliable data connection is present (for example, in terms of sufficient available bandwidth and sufficient protection against network failures) between the two entities considered, i.e. between the bicycle 5-2 and the central controller 9 or between the mobile electronic device 4 and the central controller 9 or between the bicycle 5-2 and the mobile electronic device 4.

The position control system 50 is such to operate, alternatively, in one of the four operating modes illustrated above and switch from one operating mode to another, as a function of the availability status of the long-distance connection between the bicycle 5-2 and the central controller 9, the availability status of the long-distance connection between the mobile electronic device 4 and the central controller 9 and the availability status of the short-distance connection between the bicycle 5-2 and the mobile electronic device 4.

The first operating mode preferably has a higher priority than the second, third and fourth operating modes, i.e. in case of availability of both the long-distance data connection between the bicycle 5-2 and the central controller 9, and the long-distance data connection between the mobile electronic device 4 and the central controller 9, the position control system 50 is such as operate in the first operating mode.

The first operating mode has the advantage (compared to the second operating mode) of enabling a correct operation of the position control system 50 also in the case where the mobile electronic device 4 is not operating (for example, because its power supply battery is discharged), or in the case where the bike-sharing application (run on the mobile electronic device 4) is not running at least in the background (such as, for example, in iPhones endowed with an iOS operating system).

It should be observed that, for the sake of simplicity, only one shared bicycle 5-2 has been shown in Figure 2, but more in general the system 50 comprises a fleet (i.e. a plurality) of shared bicycles made like the bicycle 5-2, such as, for example, the bicycles 5-3, 5-4, 5-5, 5-6, 5-10, 5-11, 5-12, 5-13, 5-14, 5-15, 5-16, 5-17 illustrated previously.

The user 8 takes a hire ride on the bicycle 5-2, as illustrated previously.

The central controller 9 has the function of performing a control of the position of the bicycle 5-2 during the movement thereof inside the service area 1.

The central controller 9 is part of a telecommunications network 10, which comprises a plurality of network elements, wherein the telecommunications network 10 is of a fixed, mobile or mixed fixed/mobile type.

The central controller 9 is for example, a computer server.

The central controller 9 comprises a long-distance signal transceiver, of a fixed or wireless type, and at least one processing unit connected with the long-distance signal transceiver.

The long-distance signal transceiver of the central controller 9 is configured to receive a message carrying data representative of the geographical position of the fleet of shared bicycles 5-1, 5-2, 5-3, 5-4, 5-5, 5-6, 5-10, 5-11, 5-12, 5-13, 5-14, 5-15, 5-16, 5-17; in this case the processing unit of the central controller 9 is configured to verify whether the shared bicycles 5-1, 5-2, 5-3, 5-4, 5-5, 5-6, 5-10, 5-11, 5-12, 5-13, 5-14, 5-15, 5-16, 5-17 are inside the service area 1:
- in case of detection of a bicycle (for example 5-1) outside the service area 1, the central controller 9 is such to transmit towards the bicycle (first operating mode) or towards the mobile electronic device 4 (second operating mode) a message indicative of the presence of an out-of-service condition, indicating the position of a bicycle outside the service area 1, in order to generate an audible alarm from the bicycle outside the service area 1 and further reject a request to park or temporarily park the bicycle (i.e. to inhibit the blocking of the movement of the bicycle) when the latter is positioned outside the service area 1 (for example, the lock 29 is open and the user cannot close it by means of the bike-sharing software application installed on his or her mobile electronic device);
- in the case where the bicycle returns inside the service area 1, the central controller 9 is such to transmit towards the bicycle (first operating mode) or towards the mobile electronic device 4 (second operating mode) a message indicative of the absence of the out-of-service condition, indicating the position of the bicycle inside the service area 1, in order to turn off the audible alarm from the bike and enable the processing of a request to park or temporarily park the bicycle, i.e. to permit the parking of the bicycle inside the virtual free-floating and main virtual parking areas.

The term "inhibit" the blocking of the movement of the bicycle means that the cyclist of the same bicycle is not authorized to block the movement of the bicycle; for example, the cyclist cannot electrically control (by means of his or her mobile electronic device 4 connected to the bicycle with a short-distance wireless connection) the closure of the lock 29, or the cyclist cannot electrically control the electric motor of the bicycle so that it functions as a brake.

Furthermore, the long-distance signal transceiver of the central controller 9 is configured to receive a message (transmitted by the bicycle 5-2 or by the mobile electronic device 4) indicative of a request to park the bicycle 5-2; in this case the processing unit of the central controller 9 is configured to verify whether the bicycle 5-2 is positioned inside a virtual free-floating parking area 2-1, 2-2 or inside a main virtual parking area 2-10, 2-11:
- if it is (i.e. the bicycle 5-2 is positioned inside a virtual free-floating parking area 2-1, 2-2 or inside a main virtual parking area 2-10, 2-11), the long-distance signal transceiver of the central controller 9 is configured to transmit, towards the bicycle 5-2 (first operating mode) or towards the mobile electronic device 4 (second operating mode), a parking enabling confirmation message indicative of an enabling of the parking of the bicycle 5-2 inside a virtual free-floating or main virtual parking area;
- if it is not (i.e. the bicycle 5-2 is positioned inside the service area 1, but outside the virtual free-floating parking areas 2-1, 2-2 and outside the main virtual parking areas 2-10, 2-11), the long-distance signal transceiver of the central controller 9 is configured to transmit, towards the bicycle 5-2 (first operating mode) or towards the mobile electronic device 4 (second operating mode), a parking disabling message indicative of a rejection of the request to park the bicycle 5-2.

Furthermore, the long-distance signal transceiver of the central controller 9 is configured to receive a request message (transmitted by the bicycle 5-2 or by the mobile electronic device 4) for a temporary parking of the bicycle 5-2 indicative of a request to begin a temporary parking of the bicycle 5-2; in this case the control unit of the central controller 9 is configured to verify whether the bicycle 5-2 is positioned inside the service area 1:
- if it is (i.e. the bicycle 5-2 is positioned inside the service area 1), the long-distance signal transceiver of the central controller 9 is configured to transmit, towards the bicycle 5-2 (first operating mode) or towards the mobile electronic device 4 (second operating mode), a temporary parking enabling message indicative of an enabling of the temporary parking of the bicycle 5-2; thus the processing unit of the central controller 9 is such to activate a timer for counting the time length of the temporary parking;
- if it is not (i.e. the bicycle 5-2 is positioned outside the service area 1), the long-distance signal transceiver of the central controller 9 is configured to transmit towards the bicycle 5-2 (first operating mode) or towards the mobile electronic device 4 (second operating mode) a temporary parking disabling message indicative of a rejection of the request to temporarily park the bicycle 5-2.

The term "temporary parking" (with reference to the bicycle 5-2 or the other shared bicycles of the fleet) means a temporary stop of the bicycle, i.e. the cyclist (who is taking a hire ride on a shared bicycle) decides to stop for an interval of time (for example, less than 3 hours), gets off the bike and parks it for said interval of time, then the hire ride of the shared bicycle recommences: therefore, during the interval of the temporary parking, the hire ride of the cyclist continues, i.e. the cyclist continues to be charged for the ride, preferably at a lower rate than when the bicycle is in movement.

Furthermore, the long-distance signal transceiver of the central controller 9 is configured to receive a message (transmitted by the bicycle 5-2 or by the mobile electronic device 4) indicative of a request to end the temporary parking of a bike (for example, 5-2), thus the processing unit of the central controller 9 is such to deactivate the timer for counting the time length of the temporary parking and the long-distance signal transceiver of the central controller 9 is configured to then transmit, towards the bicycle 5-2 (first operating mode) or towards the mobile electronic device 4 (second operating mode), a message indicative of a confirmation of the end of the temporary parking of the bicycle (for example, 5-2).

Furthermore, the processing unit of the central controller 9 is configured to verify, during the temporary parking of a bike inside the service area 1, whether the current value of the timer for counting the time length of the temporary parking is less than a defined value (for example, equal to 3 hours):
- if it is (i.e. the current value of the timer for counting the time length of the temporary parking is less than the defined value), the timer for counting the time length of the temporary parking will continue to be increased;
- if it is not (i.e. the current value of the timer for counting the time length of temporary parking is at least equal to the defined value), the long-distance signal transceiver of the central controller 9 is configured to transmit, towards the bicycle 5-2 (first operating mode) or towards the mobile electronic device 4 (second operating mode), a temporary parking alarm message indicative of the expiry of the timer for counting the time length of the temporary parking.

The central controller 9 preferably comprises a non-volatile memory configured to store a value representative of the available credit (for example, in Euro) for each cyclist who uses the bike-sharing service. In this case, the processing unit of the central controller 9 is configured to verify, during the temporary parking of a bike inside the service area 1 (in addition to or as an alternative to the verification of the timer for counting the time length), whether the current value of the available credit is less than a threshold value (for example, equal to zero); if it is not, it is configured to decrease the value of the residual credit of the cyclist who is temporarily parking the bicycle, whereas if it is, the long-distance signal transceiver of the central controller 9 is configured to transmit towards the mobile electronic device 4 the temporary parking alarm message further indicative of the depletion of the residual credit of the cyclist.

The mobile electronic device 4 belongs to the cyclist 8 and has the function of generating requests for parking or temporary parking of the shared bicycle 5-2.

The mobile electronic device 4 comprises a processing unit configured to run a suitable bike-sharing software application having the function of controlling the bike-share service for the shared bicycle 5-2, such as, for example, activating or ending a hire ride of the bicycle 5-2, activating or ending a permanent parking of the bicycle 5-2, or activating or ending a temporary parking of the bicycle 5-2.

The mobile electronic device 4 further comprises a screen for displaying the service area 1, the virtual free-floating parking areas 2-1, 2-2 and the main virtual parking areas 2-10, 2-11.

The mobile electronic device 4 is for example a smartphone or a tablet.

The mobile electronic device 4 comprises a long-distance wireless signal transceiver configured to exchange with the central controller 9 a first signal S1_r_ld of the long-distance wireless type via a long-distance data connection of the wireless type or of a mixed wireless/fixed type.

The mobile electronic device 4 further comprises a short-distance wireless signal transceiver configured to exchange a signal S_r_sd of the short-distance wireless type with the bicycle 5-2.

The first long-distance wireless signal S1_r_ld of the long-distance wireless transceiver of the mobile electronic device 4 is for example a mobile radio signal of the GSM/GPRS, UMTS, LTE type or later standards, whereas the short-distance wireless signal S_r_sd of the short-distance wireless signal transceiver of the mobile electronic device 4 is for example of the Bluetooth, Wifi, Near Field Communication (NFC) and Radio-Frequency Identification (RFID) type.

In particular, in the second operating mode the short-distance wireless signal transceiver of the mobile electronic device 4 is configured to receive from the bicycle 5-2 the short-distance wireless signals S_r_sd carrying data representative of the geographical position of the bicycle 5-2; therefore, in the second operating mode the long-distance wireless signal transceiver of the mobile electronic device 4 is configured to transmit towards the central controller 9 the first long-distance wireless signal S1_r_ld carrying said data representative of the geographical position of the bicycle 5-2. Furthermore, in the second operating mode the long-distance wireless signal transceiver of the mobile electronic device 4 is configured to receive from the central controller 9 the message indicative of the presence of an out-of-service condition or the message indicative of the absence of the out-of-service condition carried by the first long-distance wireless signal S1_r_ld; therefore, the short-distance wireless signal transceiver of the mobile electronic device 4 is configured to transmit towards the bicycle 5-2 the short-distance wireless signals S_r_sd carrying, respectively, said message indicative of the presence of an out-of-service condition or said message indicative of the absence of the out-of-service condition.

Furthermore, in the first operating mode the short-distance wireless signal transceiver of the mobile electronic device 4 is configured to transmit towards the bicycle 5-2 the short-distance wireless signal S_r_sd carrying the request message for parking the bicycle 5-2; in this case the short-distance wireless signal transceiver of the mobile electronic device 4 is configured to receive from the bicycle 5-2 the short-distance wireless signal S_r_sd carrying the confirmation message of the enabling of the parking of the bicycle 5-2 or the message of the disabling of the parking of the bicycle 5-2.

Furthermore, in the second operating mode the long-distance wireless signal transceiver of the mobile electronic device 4 is configured to transmit towards the central controller 9 the first long-distance wireless signal S1_r_ld carrying the request message for parking the bicycle 5-2; in this case the long-distance wireless signal transceiver of the mobile electronic device 4 is configured to receive from the central controller 9 the confirmation message of the enabling of the parking of the bicycle 5-2 or the message of the disabling of the parking of the bicycle 5-2 carried by the first long-distance wireless signal S1_r_ld; therefore, the short-distance wireless signal transceiver of the mobile electronic device 4 is configured to transmit towards the bicycle 5-2 the short-distance wireless signal S_r_sd carrying, respectively, the confirmation message of the enabling of the parking of the bicycle 5-2 or the message of the disabling of the parking of the bicycle 5-2.

Furthermore, in the first operating mode the short-distance wireless signal transceiver of the mobile electronic device 4 is configured to transmit towards the bicycle 5-2 the short-distance wireless signal S_r_sd carrying the request message for a temporary parking of the bicycle 5-2; in this case, the short-distance wireless signal transceiver of the mobile electronic device 4 is configured to receive from the bicycle 5-2 the short-distance wireless signal S_r_sd carrying the message of the enabling of the temporary parking of the bicycle 5-2 or the message of the disabling of the temporary parking of the bicycle 5-2.

Furthermore, in the second operating mode the long-distance wireless signal transceiver of the mobile electronic device 4 is configured to transmit towards the central controller 9 the first long-distance wireless signal S1_r_ld carrying the request message for a temporary parking of the bicycle 5-2; in this case the long-distance wireless signal transceiver of the mobile electronic device 4 is configured to receive from the central controller 9 the first long-distance wireless signal S1_r_ld carrying the message of the enabling of the temporary parking of the bicycle 5-2 or the message of the disabling of the temporary parking of the bicycle 5-2; therefore, the long-distance wireless signal transceiver of the mobile electronic device 4 is configured to transmit towards the bicycle 5-2 the short-distance wireless signal S_r_sd carrying, respectively, the message of the enabling of the temporary parking of the bicycle 5-2 or the message of the disabling of the temporary parking of the bicycle 5-2.

Furthermore, in the first operating mode the short-distance wireless signal transceiver of the mobile electronic device 4 is configured to transmit towards the bicycle 5-2 the short-distance wireless signal S_r_sd carrying the request message for the term of the temporary parking of the bicycle 5-2; in this case the short-distance wireless signal transceiver of the mobile electronic device 4 is configured to receive from the bicycle 5-2 the short-distance wireless signal S_r_sd carrying the confirmation message of the end of the temporary parking of the bicycle 5-2.

Furthermore, in the second operating mode the long-distance wireless signal transceiver of the mobile electronic device 4 is configured to transmit towards the central controller 9 the first long-distance wireless signal S1_r_ld carrying a message indicative of a request for the end of the temporary parking of the bicycle 5-2: in this case the long-distance wireless signal transceiver of the mobile electronic device 4 is configured to receive from the central controller 9 the confirmation message of the end of the temporary parking of the bicycle 5-2 carried by the first long-distance wireless signal S1_r_ld; therefore, the short-distance wireless signal transceiver of the mobile electronic device 4 is configured to transmit towards the bicycle 5-2 the short-distance wireless signal S_r_sd carrying the confirmation message of the end of the temporary parking of the bicycle 5-2.

The bicycle 5-2 further comprises a means for blocking/unblocking the movement of the bicycle itself.

The blocking/unblocking means of the bicycle 5-2 is for example, the electro-mechanical lock 29, which is adapted to switch between a closed position, wherein it is such to block the rotation of the rear wheel (and thus block the movement) of the bicycle 5-2, and an open position, wherein it is such to enable the rotation of the rear wheel (and thus unblock the movement) of the bicycle 5-2.

Alternatively, the blocking/unblocking means of the bicycle 5-2 is an electric motor 27, which is suitably controlled so as to act as an active or passive brake in order to block (or at least greatly slow down) the movement of the bicycle 5-2.

The bicycle 5-2 further comprises an electro-mechanical device 20 having the function of receiving/transmitting the messages illustrated above from/towards the electronic device 4 and the central controller 9, via the long- and short-distance communication channels.

The electro-mechanical device 20 further has the function of controlling the means for blocking/unblocking the movement of the bicycle 5-2, wherein said blocking/unblocking means can be external to the electro-mechanical device 20 or internal to the electro-mechanical device 20.

The electro-mechanical device 20 is for example mounted in the hub of the rear wheel of the bicycle 5-2.

In particular, in the case where the electro-mechanical lock 29 is present, the electro-mechanical device 20 is such to generate a lock command signal S_lk to control the opening/closing of the lock 29 of the bicycle 5-2.

Alternatively, in the case where the blocking/unblocking of the movement of the bicycle 5-2 is of the electrical type, the electro-mechanical device 20 further comprises an electric motor 27 (positioned for example, in the hub of the rear wheel), which is controlled by a processing unit 23, which generates a motor drive signal S_drv_m to control the motor 27 in such a way that it acts as an active brake which blocks (or greatly slows down) the movement of the rear wheel of the bicycle 5-2, or to control the motor 27 in such a way that it enables the movement of the rear wheel of the bicycle 5-2.

When the movement of the rear wheel of the bicycle 5-2 is enabled, the electro-mechanical device 20 preferably has the further function of assisting the cyclist during pedalling by means of the electric motor 27 and of conveniently recharging a battery 25 mounted on the bicycle 5-2, which powers the electric motor 27.

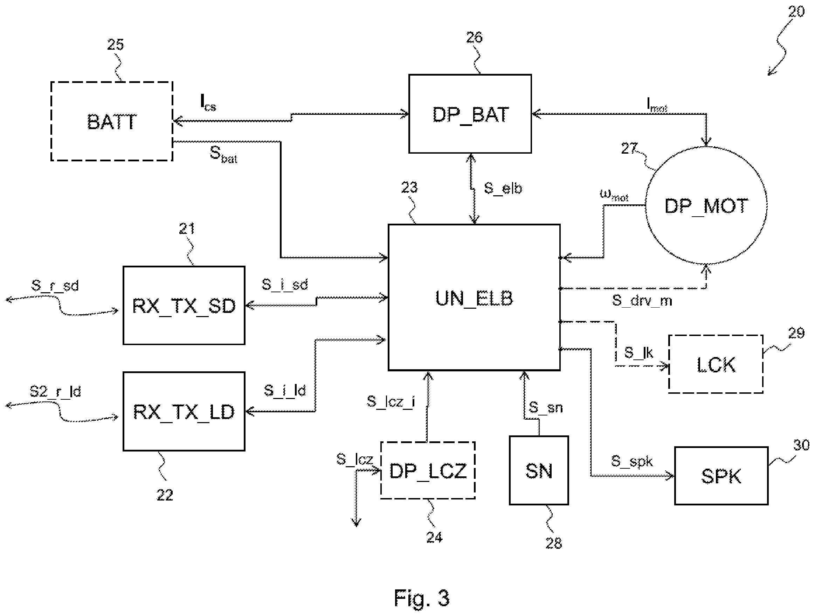

With reference to Figure 3, the electro-mechanical device 20 comprises:
- a long-distance wireless signal transceiver 22;
- a short-distance wireless signal transceiver 21, for example of the Bluetooth, Wifi, NFC or RFID type;
- a processing unit 23;
- a battery 25;
- a battery management device 26;
- a geographical tracking device 24;
- a speaker 30;
- an electric motor/generator 27;
- one or more sensors 28 of accelerations/angular velocities associated with the movement of the bicycle 5-2.

The electro-mechanical device 20 preferably further comprises a memory configured to store data representative of a geographical map, in which the service area 1 is defined.

The battery 25 and the geographical tracking device 24 can be positioned either internally or externally to the electro-mechanical device 20.

The geographical tracking device 24 is configured to receive data representative of the geographical position of the bicycle 5-2 and forward them towards the processing unit 23, the processing unit 23 is configured to then transmit, to the short-distance wireless signal transceiver 21, said data representative of the geographical position of the bicycle 5-2, and the short-distance wireless signal transceiver 21 of the electro-mechanical device 20 is configured to transmit, towards the mobile electronic device 4, the short-distance wireless signal S_r_sd carrying said data representative of the geographical position of the bicycle 5-2; furthermore, in the first operating mode the long-distance wireless signal transceiver 22 is configured to transmit, towards the central controller 9, the second long-distance wireless signal S2_r_ld carrying data representative of the geographical position of the bicycle 5-2.

The long-distance wireless signal transceiver 22 is configured to exchange with the central controller 9 a second signal S2_r_ld of the long-distance wireless type, for example a mobile radio signal of the GSM/GPRS, UMTS, LTE type or later standards.

Furthermore, according to the first operating mode, the long-distance wireless signal transceiver 22 of the electro-mechanical device 20 is configured to receive, directly from the central controller 9, the message indicative of the presence of an out-of-service condition or the message indicative of the absence of the out-of-service condition carried by the second long-distance wireless signal S2_r_ld.

Furthermore, according to the first operating mode, the long-distance wireless signal transceiver 22 is configured to transmit, towards the central controller 9, the second long-distance wireless signal S2_r_ld carrying the request message for parking the bicycle 5-2, the long-distance wireless signal transceiver 22 is configured to then receive, from the central controller 9, the confirmation message of the enabling of the parking of the bicycle 5-2 or the message of the disabling of the parking of the bicycle 5-2 carried by the second long-distance wireless signal S2_r_ld.

Furthermore, according to the first operating mode, the long-distance wireless signal transceiver 22 is configured to transmit, towards the central controller 9, the second long-distance wireless signal S2_r_ld carrying the request message for temporary parking of the bicycle 5-2, the long-distance wireless signal transceiver 22 is configured to then receive, from the central controller 9, the message of the enabling of the temporary parking of the bicycle 5-2 or the message of the disabling of the temporary parking of the bicycle 5-2 carried by the second long-distance wireless signal S2_r_ld.

Furthermore, according to the first operating mode, the long-distance wireless signal transceiver 22 is configured to transmit, towards the central controller 9, the second long-distance wireless signal S2_r_ld carrying the message indicative of a request for the end of the temporary parking of the bicycle 5-2, the long-distance wireless signal transceiver 22 is configured to then receive, from the central controller 9, the confirmation message of the end of the temporary parking of the bicycle 5-2 carried by the second long-distance wireless signal S2_r_ld.

The short-distance wireless signal transceiver 21 of the electro-mechanical device 20 of the bicycle 5-2 is configured to exchange the short-distance wireless signal S_r_sd with the mobile electronic device 4.

In particular, the short-distance wireless signal transceiver 21 of the electro-mechanical device 20 is configured to receive, from the mobile electronic device 4 (second operating mode), the short-distance wireless signal S_r_sd carrying the message indicative of the presence of an out-of-service condition, the processing unit 23 is configured to then receive, from the short-distance wireless signal transceiver 21, the message indicative of the presence of an out-of-service condition and to reject a request to park or temporarily park the bicycle 5-2 (i.e. the blocking of the movement of the bicycle 5-2 is inhibited), for example, by generating the lock command signal S_lk having a value indicative of the opening of the lock 29 of the bicycle 5-2; furthermore, the processing unit 23 is configured to generate the speaker control signal S_spk indicative of the generation of an audible alarm from the speaker 30.

For example, the bicycle 5-1 is outside the service area 1 and the bicycle 5-1 receives (from the central controller 9 or from the smartphone 2 itself) the message indicative of the presence of the out-of-service condition. The cyclist transmits (by means of his or her smartphone 2) to the bicycle 5-1 a message indicative of a request to park or temporarily park the bicycle 5-1: in this case, the processing unit 23 of the electro-mechanical device 20 of the bicycle 5-1 receives the request message for parking or temporary parking, detects the presence of the out-of-service condition and thus rejects said parking or temporary parking request, i.e. it does not enable the blocking of the movement of the bicycle 5-1, for example, by disabling the closure of the lock 29 or disabling the functioning of the electric motor 27 as a brake.

When the processing unit 23 receives the message indicative of the presence of the out-of-service condition, it preferably activates a timer for counting the time length of the out-of-service condition which measures the interval of time during which the out-of-service condition is present: when the value measured by the timer for counting the time length is greater than a theft threshold time value (for example, equal to 1 hour or 2 hours), the processing unit 23 of the electro-mechanical device 20 of the bicycle 5-1 generates the command signal which blocks the movement of the bicycle 5-1 (for example, the blocking signal S_lk having a value representative of the closure of the lock 29 is generated).

Furthermore, the short-distance wireless signal transceiver 21 receives, from the mobile electronic device 4 (second operating mode), the short-distance wireless signal S_r_sd carrying the message indicative of the absence of the out-of-service condition, the processing unit 23 is configured to then receive from the short-distance wireless signal transceiver 21 the message indicative of the absence of the out-of-service condition and to generate therefrom the speaker control signal S_spk indicative of the turning off of the audible alarm by the speaker 30; furthermore, the processing unit 23 is configured to receive the message indicative of the absence of the out-of-service condition and to enable the processing of a request to park or temporarily park the bicycle, as a function of the position of the bicycle 5-1 relative to the main or free-floating virtual parking areas.

Furthermore, in the first operating mode the long-distance wireless signal transceiver 22 of the electro-mechanical device 20 is configured to receive, from the central controller 9, the confirmation message of the enabling of the parking of the bicycle 5-2 or the message of the disabling of the parking of the bicycle 5-2 carried by the long-distance communication channel, the electro-mechanical device 20 is configured to then generate the command signal indicative of the blocking or inhibition of the blocking, respectively, of the movement of the bicycle 5-2, such as, for example, the lock command signal S_lk which controls the closing or opening, respectively, of the lock 29 of the bicycle 5-2.

Furthermore, in the second operating mode the short-distance wireless signal transceiver 21 of the electro-mechanical device 20 is configured to receive, from the mobile electronic device 4, the short-distance wireless signal S_r_sd carrying the confirmation message of the enabling of the parking of the bicycle 5-2 or the message of the disabling of the parking of the bicycle 5-2, the electro-mechanical device 20 is configured to then generate the command signal indicative of the blocking or inhibition of the blocking, respectively, of the movement of the bicycle 5-2, such as, for example, the lock command signal S_lk which controls the closing or opening, respectively, of the lock 29 of the bicycle 5-2.

Furthermore, in the first operating mode the long-distance wireless signal transceiver 22 of the electro-mechanical device 20 is configured to receive, from the central controller 9, the message of the enabling of the temporary parking of the bicycle 5-2 or the message of the disabling of the temporary parking of the bicycle 5-2 carried by the long-distance communication channel, the electro-mechanical device 20 is configured to then generate the command signal indicative of the blocking or inhibition of the blocking, respectively, of the movement of the bicycle 5-2, such as, for example, the lock command signal S_lk which controls the closing or opening, respectively, of the lock 29 of the bicycle 5-2.

Furthermore, in the second operating mode the short-distance wireless signal transceiver 21 of the electro-mechanical device 20 is configured to receive, from the mobile electronic device 4, the short-distance wireless signal S_r_sd carrying the message of the enabling of the temporary parking of the bicycle 5-2 or the message of the disabling of the temporary parking of the bicycle 5-2, the processing unit 23 is configured to then receive the message of the enabling of the temporary parking of the bicycle 5-2 or the message of the disabling of the temporary parking of the bicycle 5-2, the processing unit 23 is configured to then generate the command signal indicative of the blocking or inhibition of the blocking, respectively, of the movement of the bicycle 5-2, such as, for example, the lock command signal S_lk which controls the closing or opening, respectively, of the lock 29.

The processing unit 23 of the electro-mechanical device 20 has the function of controlling the blocking/unblocking of the movement of the bicycle 5-2, as a function of the content of messages received directly from the central controller 9 (first operating mode) or received from the central controller crossing the mobile electronic device 4 (second operating mode).

In particular, the processing unit 23 is configured to receive, by means of the geographical tracking device 24, data representative of the current geographical position of the bicycle 5-2 and is configured to receive a message which indicates whether the bicycle is inside or outside the service area 1:
- if it is (i.e. the bicycle is inside the service area 1, for example the bicycle 5-2), the processing unit 23 is configured to receive the message indicative of the absence of the out-of-service condition, is configured to receive a confirmation message of the enabling of the parking or a message of the enabling of the temporary parking of the bicycle 5-2 and is configured to generate the command signal for temporarily blocking the movement of the bicycle;
- if it is not (i.e. the bicycle is outside the service area 1, for example 5-1), the processing unit 23 is configured to receive the message indicative of the presence of an out-of-service condition indicative of the position of the bicycle outside the service area 1, is configured to receive a disabling message for the parking or temporary parking of the bicycle and is configured to generate the command signal to inhibit the blocking of the movement of the shared bicycle.

When the processing unit 23 is such to receive the message indicative of the presence of an out-of-service condition, indicating the position of the shared bicycle outside the service area 1, the processing unit 23 is preferably further configured to activate the timer for counting the time length of the out-of-service condition and verify whether the value measured by the timer for counting the time length of the out-of-service condition has reached the theft threshold value:
- if it has not (i.e. the value measured by the timer for counting the time length of the out-of-service condition is less than the theft threshold value), the processing unit 23 is such to generate the command signal which inhibits the blocking of the movement of the shared bicycle;
- if it has (i.e. the value measured by the timer for counting the time length of the out-of-service condition has reached the theft threshold value), the processing unit 23 is such to generate the command signal which blocks the movement of the shared bicycle.

Furthermore, the processing unit 23 is configured to receive the message indicative of the confirmation of the end of the temporary parking of the bicycle and is configured to generate therefrom the command signal indicative of the unblocking of the movement of the bicycle 5-2, such as, for example, the lock command signal S_lk indicative of the opening of the lock 29.

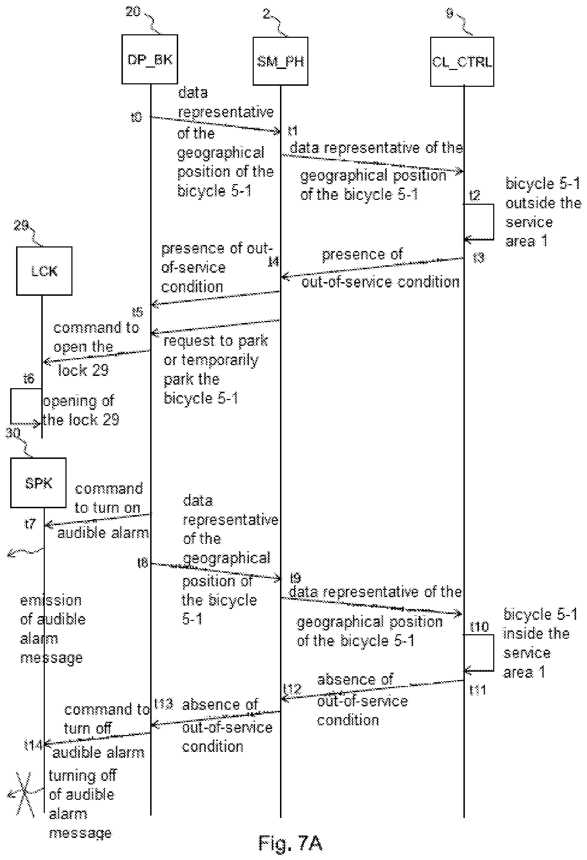

With reference to Figure 7A, it shows the messages exchanged over time in the system 50 to control the position of the shared bicycle 5-1 in the second operating mode (second embodiment of the invention), in the case where the bicycle 5-1 leaves the service area 1 and subsequently returns inside the service area 1.

For the purpose of explaining the invention, it is considered that the mobile electronic device 2 of the cyclist of the bicycle 5-1 is a smartphone and that the bicycle 5-1 is provided with the lock 29 and it is supposed that the bicycle 5-1 is positioned outside the service area 1.

At the instant t0, the geographical tracking device 24 mounted on the bicycle 5-1 receives, from the satellite 11, the data representative of the geographical position of the bicycle 5-1 and subsequently the short-distance wireless signal transceiver 21 of the electro-mechanical device 20 (mounted on the bicycle 5-1) transmits, towards the smartphone 2 of the cyclist of the bicycle 5-1, said data representative of the geographical position of the bicycle 5-1.

At the instant t1 (following t0) the smartphone 2 receives the data representative of the geographical position of the bicycle 5-1 and forwards them towards the central controller 9.

Alternatively (or in combination with what was illustrated above for the instants t0 and t1), the electro-mechanical device 20 of the bicycle 5-1 comprises a long-distance wireless signal transceiver, which transmits the data representative of the geographical position of the bicycle 5-1 directly to the central controller 9.

The central controller 9 receives said data representative of the geographical position of the bicycle 5-1 and at the instant t2 (following t1) detects that the bicycle 5-1 is outside the service area 1 and at the instant t3 the central controller 9 transmits, towards the smartphone 2, a message indicative of the presence of an out-of-service condition, indicating the position of the bicycle 5-1 outside the service area 1.

At the instant t4 (following t3), the smartphone 2 receives the message indicative of the presence of an out-of-service condition and forwards it towards the bicycle 5-1; a graphic or text indication representative of the presence of the out-of-service condition (for example, a red-coloured area intermittently lights up and shuts off) is preferably displayed on the screen of the smartphone 2.

At the instant t5 (following t4), the electro-mechanical device 20 of the bicycle 5-1 receives the message indicative of the presence of an out-of-service condition, receives a request to park or temporarily park the bicycle 5-1 and rejects said parking or temporary parking request; in this case the electro-mechanical device 20 generates the lock command signal S_lk carrying a value indicative of the opening of the lock 29 of the bicycle 5-1; therefore, when the bicycle 5-1 is outside the service area 1, at the instant t6 the lock 29 of the bicycle 5-1 is maintained in the open position, wherein the bicycle 5-1 can move and the closing of the lock 29 of the bicycle 5-1 is inhibited, i.e. the cyclist of the bicycle 5-1 cannot control (by means of the bike-sharing application run on his or her smartphone 2) the end of the ride on the bicycle 5-1 and charging for the ride thus continues.

Following receipt of the message indicative of the presence of an out-of-service condition, the speaker 30 of the bicycle 5-1 emits, at the instant t7, an audible signal to warn the cyclist of the bicycle 5-1 that he or she has gone outside the service area 1.

Subsequently, the bicycle 5-1 returns inside the service area 1 and at the instant t8 (following t7) the geographical tracking device 24 of the bicycle 5-1 receives, from the satellite 11, the data representative of the geographical position of the bicycle 5-1 and the short-distance wireless signal transceiver 21 of the electro-mechanical device 20 of the bicycle 5-1 subsequently transmits, towards the smartphone 2, said data representative of the geographical position of the bicycle 5-1.

At the instant t9 (following t8) the smartphone 2 receives the data representative of the geographical position of the bicycle 5-1 and forwards them towards the central controller 9.

Alternatively (or in combination with what was illustrated above for the instants t8 and t9), the long-distance wireless signal transceiver of the electro-mechanical device 20 of the bicycle 5-1 transmits the data representative of the geographical position of the bicycle 5-1 directly to the central controller 9.

The central controller 9 receives said data representative of the geographical position of the bicycle 5-1 and at the instant t10 (following t9) it detects that the bicycle 5-1 has returned inside the service area 1 and at the instant t11 the central controller 9 transmits, towards the smartphone 2, a message indicative of the absence of the out-of-service condition, indicating the position of the bicycle 5-1 inside the service area 1.

At the instant t12 (following t11) the smartphone 2 receives the message indicative of the absence of the out-of-service condition and forwards it towards the bicycle 5-1.

At the instant t13 (following t12) the electro-mechanical device 20 of the bicycle 5-1 receives the message indicative of the absence of the out-of-service condition and at the instant t14 the audible signal of the speaker 30 of the bicycle 5-1 is turned off: therefore, the cyclist on the bicycle 5-1 continues his or her ride inside the service area 1 and the lock 29 of the bicycle 5-1 is thus controlled in such a way as to enable the closing thereof when the bicycle 5-1 is inside a virtual free-floating or main virtual parking area, so as to disable the permanent closing thereof when it is outside the virtual free-floating and main virtual parking areas and so as to enable the temporary closing thereof in case of temporary parking.

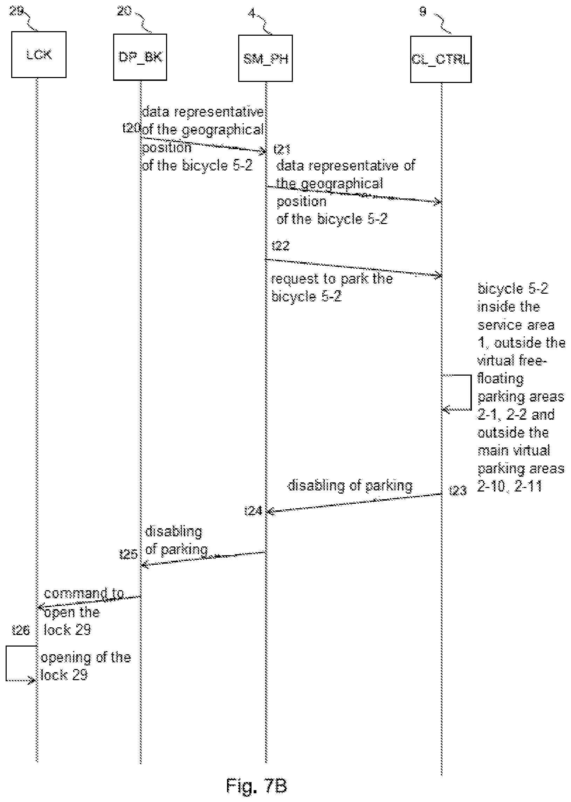

With reference to Figure 7B, it shows the messages exchanged over time in the system 50 to control the position of the shared bicycle 5-2 in the second operating mode (second embodiment of the invention), in the case where the bicycle 5-2 is inside the service area 1, but outside the virtual free-floating or main virtual parking areas, as indicated by the position 5-2-a) of Figure 1A.

For the purpose of explaining the invention, it is once again considered that the mobile electronic device 4 of the cyclist 8 of the bicycle 5-2 is a smartphone.

At the instant t20, the geographical tracking device 24 of the bicycle 5-2 receives, from the satellite 11, the data representative of the geographical position of the bicycle 5-2 and the short-distance wireless signal transceiver 21 of the electro-mechanical device 20 of the bicycle 5-2 subsequently transmits, towards the smartphone 4, said data representative of the geographical position of the bicycle 5-2.

At the instant t21 (following t20), the smartphone 4 receives the data representative of the geographical position of the bicycle 5-2 and forwards them towards the central controller 9; furthermore, the cyclist 8 generates (by means of the smartphone 4) a request to park the bicycle 5-2 and at the instant t22 the smartphone 3 transmits, towards the central controller 9 (and possibly also towards the bicycle 5-2), a parking request message indicative of a request to park the bicycle 5-2.

The central controller 9 receives said data representative of the geographical position of the bicycle 5-2, receives the parking request message, detects that the position of the bicycle 5-1 is inside the service area 1, but is outside the virtual free-floating parking areas 2-1, 2-2 and also outside the main virtual parking areas 2-10, 2-11; therefore, at the instant t23 the central controller 9 transmits towards the smartphone 4 a parking disabling message indicative of the rejection of the request to park the bicycle 5-2.

At the instant t24 (following t23), the smartphone 4 receives the parking disabling message and forwards it towards the bicycle 5-2.

At the instant t25 (following t24), the electro-mechanical device 20 of the bicycle 5-2 receives the parking disabling message and generates therefrom the lock command signal S_lk carrying a value indicative of the opening of the lock 29 of the bicycle 5-2: therefore, when the bicycle 5-2 is inside the service area 1, but outside the virtual free-floating parking areas 2-1, 2-2 and outside the main virtual parking areas 2-10, 2-11, at the instant t26 the lock 29 of the bicycle 5-2 is maintained in the open position wherein the bicycle 5-2 can move and the closing of the lock 29 of the bicycle 5-2 is inhibited, i.e. the cyclist 8 of the bicycle 5-2 cannot end (by means of the bike-sharing application run on his or her smartphone 4) the ride on the bicycle 5-2 and charging for the ride thus continues.

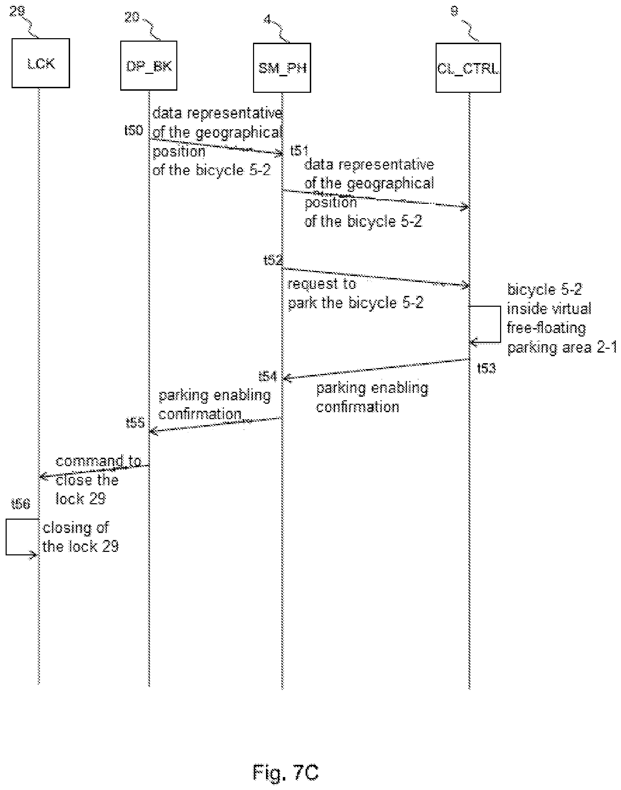

With reference to Figure 7C, it shows the messages exchanged over time in the system 50 to control the position of the shared bicycle 5-2 in the second operating mode (second embodiment of the invention), in the case where the bicycle 5-2 is inside the service area 1 and also inside the virtual free-floating parking area 2-1, as indicated by the position 5-2-b) of Figure 1A.

For the purpose of explaining the invention, it is once again considered that the mobile electronic device 4 of the cyclist 8 of the bicycle 5-2 is a smartphone.

The operation comprised between the instants t50 and t52 of Figure 7C is equal to that comprised between the instants t20 and t22 of Figure 7B; therefore, at the instant t52 the smartphone 4 transmits, towards the central controller 9 (and possibly also towards the bicycle 5-2), a parking request message indicative of a request to park the bicycle 5-2.

The central controller 9 receives said data representative of the geographical position of the bicycle 5-2, receives the parking request message, detects that the position of the bicycle 5-1 is inside the virtual free-floating parking area 2-1, and then at the instant t53 the central controller 9 transmits, towards the smartphone 4, a parking enabling confirmation message indicative of an enabling of the parking of the bicycle 5-2.

At the instant t54 (following t53), the smartphone 4 receives the confirmation message of the enabling of the parking and forwards it towards the bicycle 5-2.

At the instant t55 (following t54), the electro-mechanical device 20 of the bicycle 5-2 receives the confirmation message of the enabling of the parking and generates therefrom the lock command signal S_lk carrying a value indicative of the closure of the lock 29 of the bicycle 5-2: therefore, when the bicycle 5-2 is inside the virtual free-floating parking area 2-1, at the instant t56 the lock 29 of the bicycle 5-2 is maintained in the closed position, wherein the bicycle 5-2 cannot move and the closing of the lock 29 of the bicycle 5-2 is enabled, i.e. the cyclist 8 of the bicycle 5-2 can end (by means of the bike-sharing application run on his or her smartphone 4) the ride on the bicycle 5-2 and thus stop being charged for the ride.

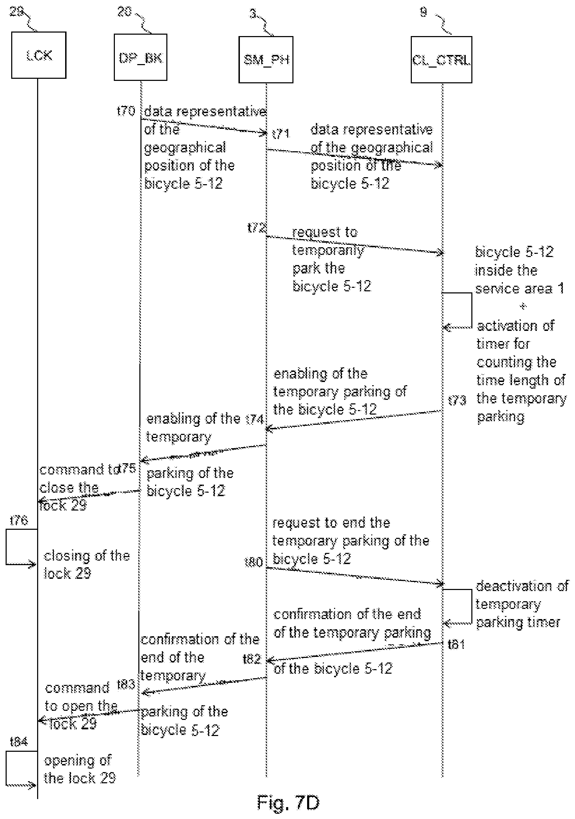

With reference to Figure 7D, it shows the messages exchanged over time in the system 50 to control the position of the shared bicycle 5-12 in the second operating mode (second embodiment of the invention), in the case where the cyclist 7 of the bicycle 5-12 temporarily parks the bicycle 5-12 inside the service area 1, but outside the virtual free-floating parking areas 2-1, 2-2 and outside the main virtual parking areas 2-10, 2-11, as indicated by the position of the bicycle 5-12 in Figures 1A and 1B.

For the purpose of explaining the invention, it is once again considered that the mobile electronic device 3 of the cyclist 7 of the bicycle 5-12 is a smartphone.

The operation comprised between the instants t70 and t71 of the Figure 7D is equal to that comprised between the instants t20 and t21 of the Figure 7B, whereas at the instant t72, the smartphone 3 transmits, towards the central controller 9 (and possibly also towards the bicycle 5-2), a request message for temporary parking of the bicycle 5-12; for example, the cyclist 7 launches the bike-sharing application on the smartphone 3, selects the bicycle 5-12 and generates a command for temporary parking of the bicycle 5-12 by touching an appropriate area on the touch screen of the smartphone 3.

The central controller 9 receives said data representative of the geographical position of the bicycle 5-12, receives the temporary parking request message, detects that the position of the bicycle 5-12 is inside the service area 1 and activates the timer for counting the time length of the temporary parking starting from a zero value, then at the instant t73 the central controller 9 transmits, towards the smartphone 3, a temporary parking enabling message indicative of an enabling of the temporary parking of the bicycle 5-12.

The timer for counting the time length is thus incremented during the temporary parking of the bicycle 5-12.

At the instant t74 (following t73), the smartphone 3 receives the message of confirmation enabling temporary parking and forwards it towards the bicycle 5-12.

At the instant t75 (following t74), the electro-mechanical device 20 of the bicycle 5-12 receives the message of confirmation enabling temporary parking and generates therefrom the lock command signal S_lk carrying a value indicative of the closure of the lock 29 of the bicycle 5-12: therefore, when the bicycle 5-12 is inside the service area 1, at the instant t76 the lock 29 of the bicycle 5-12 is maintained in the closed position, wherein the rear wheel of the bicycle 5-12 cannot rotate and the closure of the lock 29 of the bicycle 5-12 is enabled, i.e. the cyclist 7 of the bicycle 5-12 can close (by means of the bike-sharing application run on his or her smartphone 4) the lock 29 of the bicycle 5-12, whereas he or she cannot end the ride on the bicycle 5-12 and thus continues to be charged for the ride.

At the instant t80, the smartphone 3 transmits, towards the central controller 9, a message requesting the end of the temporary parking of the bicycle 5-12; for example, the cyclist 7 launches the bike-sharing application on the smartphone 3, selects the bicycle 5-12 and generates a command to request the end of the temporary parking of the bicycle 5-12, by touching an appropriate area on the touch screen of the smartphone 3.

The central controller 9 receives the request message for ending the temporary parking, deactivates the timer for counting the time length of the temporary parking (i.e. the timer is stopped), then at the instant t81 the central controller 9 transmits, towards the smartphone 3, a confirmation message of the end of the temporary parking indicative of the end of the temporary parking of the bicycle 5-12.

At the instant t82 (following t81), the smartphone 3 receives the confirmation message of the end of the temporary parking and forwards it towards the bicycle 5-12.

At the instant t83 (following t82), the electro-mechanical device 20 of the bicycle 5-12 receives the confirmation message of the end of the temporary parking of the bicycle 5-12 and generates therefrom the lock command signal S_lk carrying a value indicative of the opening of the lock 29 of the bicycle 5-12: therefore, at the instant t84 the lock 29 of the bicycle 5-12 is opened so that the bicycle 5-12 can move, so the cyclist 7 can resume his or her ride on the bicycle 5-12.

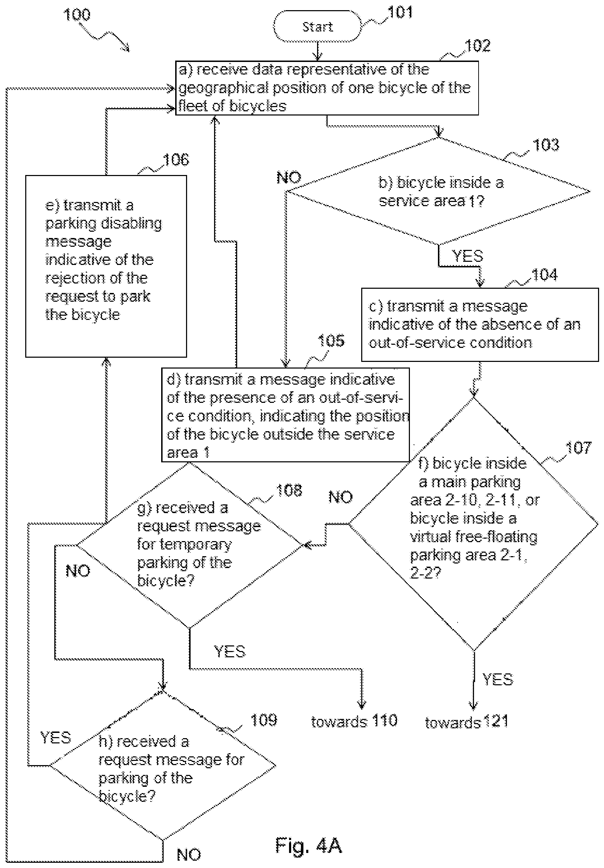

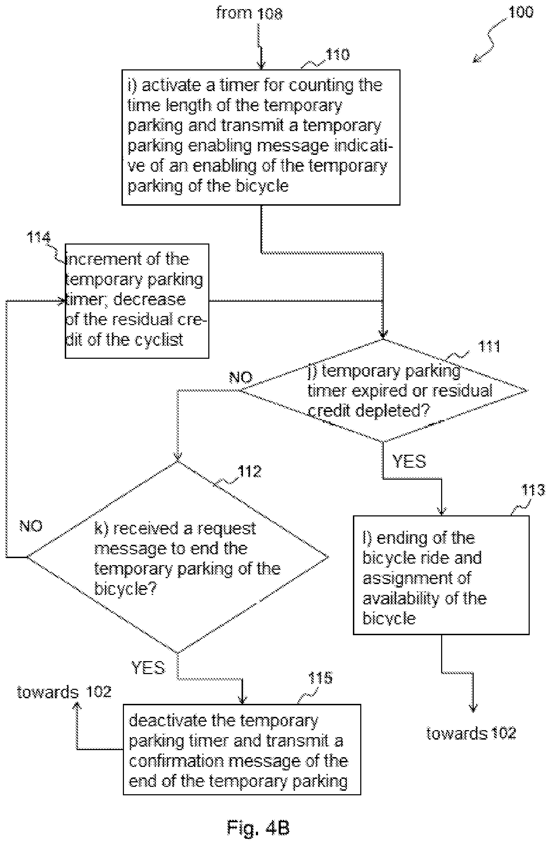

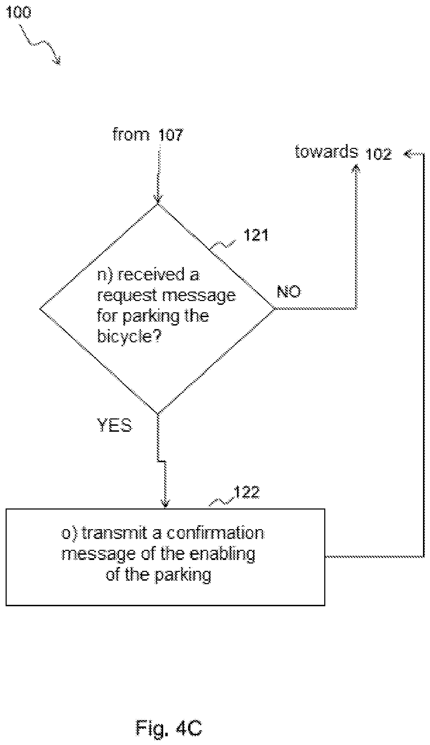

With reference to the Figure 4A-4C, it shows the flow diagram 100 of the method to control the position of a shared bicycle inside or outside a service area 1 in the first and second operating modes of the control system 50 (first and second embodiments, respectively).

The position control method is carried out on one or more processing units of the central controller 9 by means of a suitable software code and is carried further out by means of a long-distance signal transceiver, of a fixed or wireless type.

The flow diagram 100 starts with step 101.

From step 101 the method proceeds to step 102, wherein data representative of the geographical position of a bike of the fleet of bicycles are received.

From step 102 the method proceeds to step 103, wherein it is verified whether the bicycle is inside the service area 1:
- if it is not (i.e. the bicycle is outside the service area 1), from step 103 the method proceeds to step 105, wherein a message indicative of the out-of-service condition is transmitted, indicating the position of the bicycle outside the service area 1, and then it returns to step 102;
- if it is (i.e. the bicycle is inside the service area 1), from step 103 the method proceeds to step 104, wherein a message indicative of the absence of the out-of-service condition is transmitted.

From step 104 (bike inside the service area 1), the method proceeds to step 107, wherein it is verified whether the bicycle is inside one of the virtual free-floating parking areas 2-1, 2-2 or inside one of the main virtual parking areas 2-10, 2-11:
- if it is (i.e. the bicycle is inside one of the virtual free-floating parking areas 2-1, 2-2 or is inside one of the main virtual parking areas 2-10, 2-11), from step 107 the method proceeds to step 121;
- if it is not (i.e. the bicycle is outside the virtual free-floating parking areas 2-1, 2-2 and also outside the main virtual parking areas 2-10, 2-11), from step 107 the method proceeds to step 108.

In step 108 it is verified whether a request message for temporary parking of the bicycle has been received:
- if it has not (i.e. no temporary parking request message has been received), from step 108 the method proceeds to step 109;
- if it has (i.e. the temporary parking request message has been received), from step 108 the method proceeds to step 110.

In step 109 it is verified whether a request message for parking the bicycle has been received:
- if it has not (i.e. no temporary parking request message has been received), from step 109 the method returns to step 102;
- if it has (i.e. the temporary parking request message has been received), from step 109 the method proceeds to step 106.

In step 106 (wherein the bicycle is inside the service area, but outside the virtual free-floating parking areas 2-1, 2-2 and outside the main virtual parking areas 2-10, 2-11) a parking disabling message indicative of a rejection of the request to park the bicycle is transmitted, then the method returns to step 102.

In step 121 (wherein the bicycle is inside the service area, and is furthermore inside one of the virtual free-floating parking areas 2-1, 2-2 or inside one of the main virtual parking areas 2-10, 2-11), it is verified whether a request message for parking the bicycle has been received:
- if it has not (i.e. no parking request message has been received), from step 121 the method returns to step 102;
- if it has (i.e. the parking request message has been received), from step 121 the method proceeds to step 122.

In step 122 a parking enabling confirmation message indicative of an enabling of the parking of the bicycle inside the virtual free-floating parking area or in the main virtual parking area is transmitted towards the shared bicycle (first operating mode) or towards the mobile electronic device 3 (second operating mode).

In step 110 (wherein a temporary parking of the bicycle has been requested) a timer for counting the time length of the temporary parking is activated and a temporary parking enabling message indicative of an enabling of the temporary parking of the bicycle is transmitted.

From step 110 the method proceeds to step 111, wherein it is verified whether the timer for counting the time length of the temporary parking has expired or whether the residual credit of the cyclist has run out:
- if it has (i.e. the timer for counting the time length temporary parking has expired, or the residual credit has run out), from step 111 the method proceeds to step 113, wherein the ride on the bicycle is ended and the availability of the bicycle is assigned, so the bicycle can be requested by another cyclist for another hire ride;
- if it has not (i.e. the timer for counting the time length temporary parking has not expired, nor has the residual credit run out), from step 111 the method proceeds to step 112.

In step 112 it is verified whether a message requesting the end of the temporary parking of the bicycle has been received:
- if it has not (i.e. no message requesting the end of the temporary parking has been received), from step 112 the method proceeds to step 114, wherein is the timer for counting the time length temporary parking is incremented and, furthermore, the residual credit of the cyclist is decreased;
- if it has (i.e. the message requesting the end of the temporary parking has been received), from step 112 the method proceeds to step 115, wherein the timer for counting the time length of the temporary parking is deactivated and, furthermore, a confirmation message of the end of the temporary parking is transmitted, then the method returns to step 102.

The messages of the flow diagram 100 are received and transmitted by means of a long-distance signal transceiver of the central controller 9, which exchanges a long-distance signal with a long-distance wireless signal transceiver of the mobile electronic device 3.

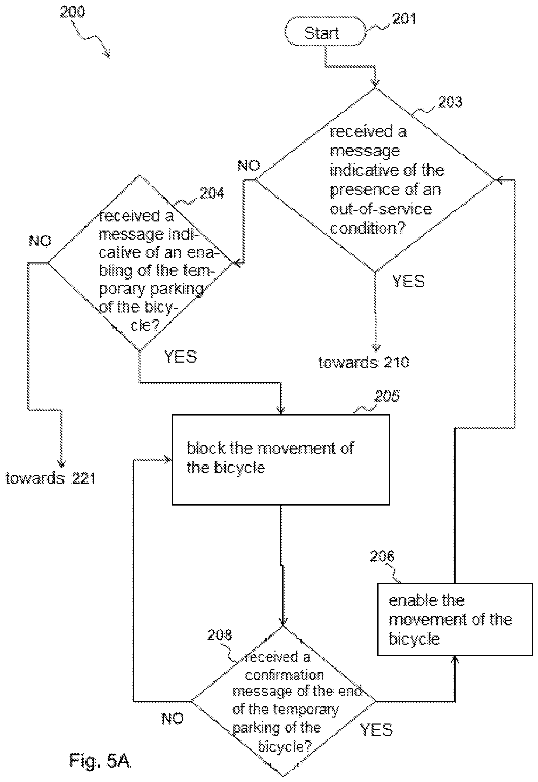

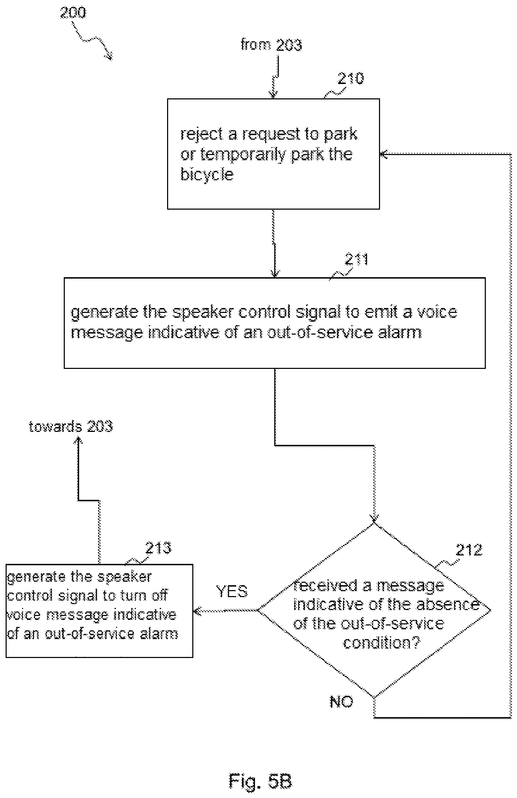

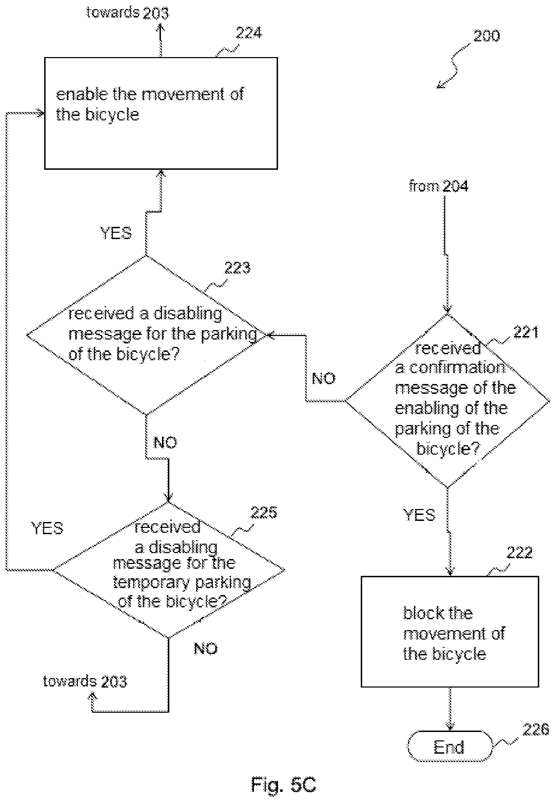

With reference to Figures 5A-5C, they show the flow diagram 200 of a method to control the blocking/unblocking of the movement of a shared bicycle inside or outside a service area 1 in the first and second operating modes of the control system 50 (first and second embodiments, respectively).

The method to control the blocking/unblocking of the movement of the bicycle is carried out on the processing unit 23 of the electro-mechanical device 20 of a shared bicycle by means of a suitable software code and is furthermore carried out by means of the transceiver 21 of short-distance wireless signals of the electro-mechanical device 20.

The flow diagram 200 starts with step 201.

From step 201 the method proceeds to step 203, wherein it is verified whether a message indicative of the presence of an out-of-service condition has been received:
- if it has, from step 203 the method proceeds to step 210;
- if it has not, from step 203 the method proceeds to step 204.

In step 204 it is verified whether an enabling message for the temporary parking of the bicycle has been received:
- if it has not, from step 204 the method proceeds to step 221;
- if it has, from step 204 the method proceeds to step 205, wherein the movement of the bicycle is blocked.

For example, in step 205 the lock command signal S_lk having a value representative of a closed position of the lock 29 of the bicycle is generated.

From step 205 the method proceeds to step 208, wherein it is verified whether a confirmation message of the end of the temporary parking of the bicycle has been received:
- if it has not, from step 208 the method returns to step 205;
- if it has (i.e. the confirmation message of the end of the temporary parking of the bicycle has been received), from step 208 the method proceeds to step 206, wherein the movement of the bicycle is enabled, then the method returns to the initial step 203.

For example, in the step 206 the lock command signal S_lk having a value representative of an open position of the lock 29 of the bicycle is generated.

In step 210 (wherein a message indicative of the presence of an out-of-service condition has been received) a request to park or temporarily park the bicycle is rejected (i.e. the blocking of the movement of the bicycle is inhibited).

For example, in the step 210 the lock command signal S_lk having a value representative of an open position of the lock 29 of the bicycle is generated; therefore, the closure of the lock 29 of the bicycle is inhibited when the latter is positioned outside the service area 1.

From step 210 the method proceeds to step 211, wherein the control signal S_spk of the speaker 3 is generated, so that the latter emits a voice message indicative of an out-of-service alarm, so as to warn the cyclist that he or she has gone outside the service area 1 with the bicycle.

From step 211 the method proceeds to step 212, wherein it is verified whether a message indicative of the absence of the out-of-service condition has been received:
- if it has not (i.e. no message indicative of the absence of the out-of-service condition has been received), from step 212 the method returns to step 210;
- if it has (i.e. a message indicative of the absence of the out-of-service condition has been received), from step 212 the method proceeds to step 213, wherein the control signal S_spk of the speaker 3 is generated, the signal having a value that turns off the out-of-service alarm message, since the cyclist has returned inside the service area 1 with the bicycle.

Therefore, the cycle composed of steps 210, 211, 212 is repeated (and the blocking of the movement of the bicycle is thus inhibited, for example by inhibiting the closure of the lock 29 thereof) until the cyclist returns inside the service area 1 and the message indicative of the absence of the out-of-service condition is then received.

From step 213 the method returns to the initial step 203.

In step 221 it is verified whether a confirmation message of the enabling of the parking of the bicycle has been received:
- if it has not, from step 221 the method proceeds to step 223;
- if it has, from step 221 the method proceeds to step 222, wherein the movement of the bicycle is blocked.

For example, in step 222 the lock command signal S_lk is generated, the signal having a value representative of a closed position of the lock 29 of the bicycle.

The flow diagram ends at step 226 (end of the hire ride of the cyclist).

In step 223 it is verified whether a disabling message for the parking of the bicycle has been received:
- if it has not, from step 223 the method proceeds to step 225;
- if it has, from step 223 the method proceeds to step 224, wherein the movement of the bicycle is enabled.

For example, in step 224 the lock command signal S_lk is generated, the signal having a value representative of an open position of the lock 29 of the bicycle.

From step 224 the method returns to the initial step 203.

In step 225 it is verified whether a message of the disabling of the temporary parking of the bicycle has been received:
- if it has not, from step 225 the method returns to the initial step 203;
- if it has, from step 225 the method proceeds to step 224.

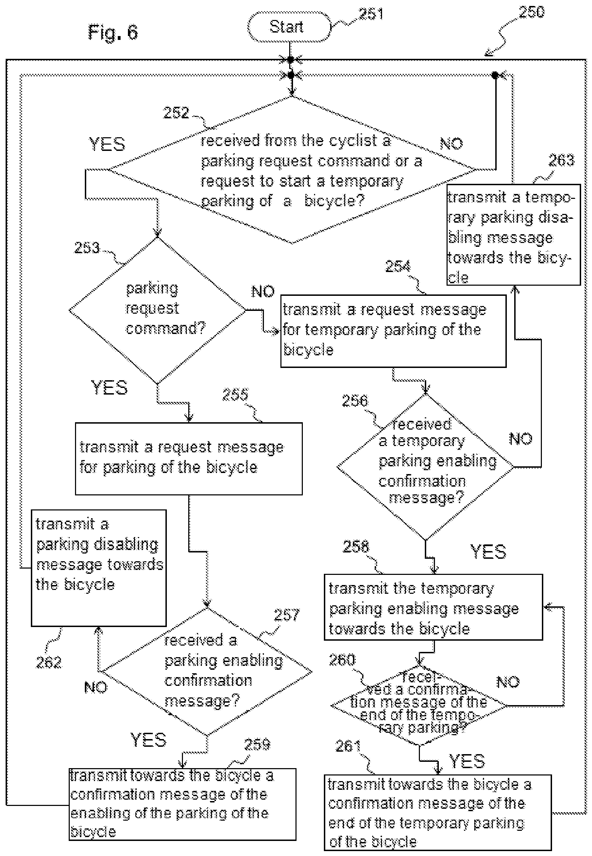

With reference to Figure 6, it shows the flow diagram 250 of a method to control the hiring of a shared bicycle in the first and second operating modes of the control system 50 (first and second embodiments, respectively).

The hiring control method is carried out on a processing unit of a mobile electronic device by means of a suitable software code (previously indicated as "bike-sharing application") and is further carried out by means of the short-distance wireless signal transceiver and the long-distance wireless signal transceiver of the mobile electronic device of the cyclist.

The flow diagram 250 starts with step 251.

From step 251 the method proceeds to step 252, wherein it is verified whether a command requesting to park a bicycle or a command requesting to begin a temporary parking of the bicycle has been received from the cyclist:
- if it has, from step 252 the method proceeds to step 253;
- if it has not, it remains at step 252.

For example, the parking request command is generated by the cyclist by touching an area of the touch screen of his or her smartphone which runs the bicycle hire control software application.

In step 253 it is verified whether a command requesting to park a bicycle has been received:
- if it has (i.e. the parking request command has been received), from step 253 the method proceeds to step 255;
- if it has not (i.e. the command requesting to begin a temporary parking has been received), from step 253 the method proceeds to step 254.

In step 254 a request message for temporary parking of the bicycle is transmitted towards the shared bicycle (first operating mode) or towards the central controller (second operating mode).

In step 255 a request message for parking the bicycle is transmitted towards the shared bicycle (first operating mode) or towards the central controller (second operating mode).

From step 255 the method proceeds to step 257, wherein it is verified whether a confirmation message of the enabling of the parking of the bicycle has been received:
- if it has, from step 257 the method proceeds to step 259 wherein the confirmation message of the enabling of the parking of the bicycle is transmitted, then the method returns to the initial step 252;
- if it has not, from step 257 the method proceeds to step 262, wherein the message of rejection of the enabling of the parking of the bicycle is transmitted towards the bicycle.

It should be observed that steps 257, 259, 262 are not present in the first operating mode, i.e. from step 255 the method returns directly to the initial step 252.

From step 254 the method proceeds to step 256, wherein it is verified whether a message of the enabling of the temporary parking of the bicycle has been received:
- if it has, from step 256 the method proceeds to step 258, wherein the message of the enabling of the temporary parking of the bicycle is transmitted towards the bicycle;
- if it has not, from step 256 the method proceeds to step 263.

In step 263 the message of the disabling of the temporary parking of the bicycle is transmitted towards the bicycle, then the method returns to the initial step 252.

From step 258 the method proceeds to step 260, wherein it is verified whether a confirmation message of the end of the temporary parking has been received:
- if it has not, from step 260 the method returns to step 258;
- if it has, from step 260 the method proceeds to step 261, wherein the confirmation message of the end of the temporary parking of the bicycle is transmitted towards the bicycle, then the method returns to the initial step 252.

It should be observed that the steps 256, 258, 263 are not present in the first operating mode, i.e. from step 254 the method proceeds directly to step 260.

When the mobile electronic device receives the out-of-service alarm message, the screen of the mobile electronic device preferably displays a graphic and/or text message indicative of the presence of the out-of-service alarm.

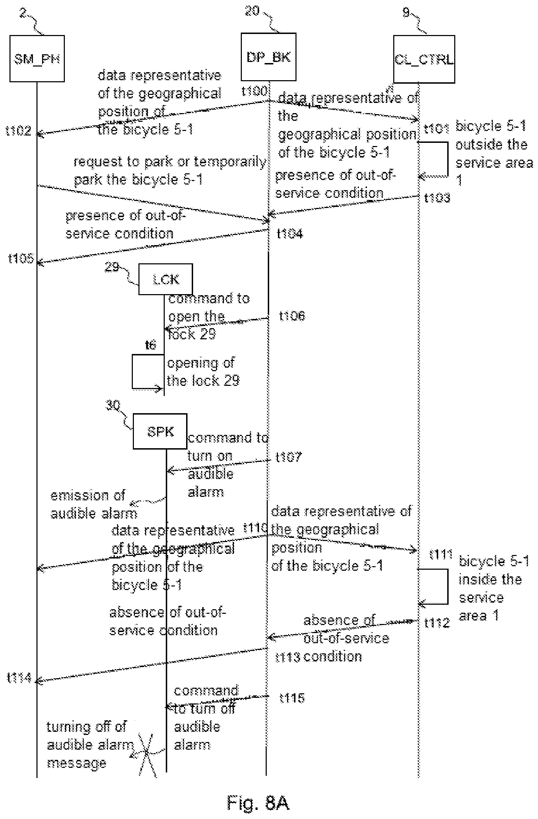

With reference to Figure 8A, it shows the messages exchanged over time in the system 50 to control the position of the shared bicycle 5-1 in the first operating mode (first embodiment of the invention), in the case where the bicycle 5-1 leaves the service area 1 and subsequently returns inside the service area 1.

The operation of Figure 8A differs from that of Figure 7A in that the long-distance wireless signal transceiver of the electro-mechanical device 20 of the bicycle 5-1 transmits the data representative of the geographical position of the bicycle 5-1 directly to the central controller 9 (instants t100 and t101, t110 and t111), by means of the long-distance data connection between the bicycle 5-1 and the central controller 9; the long-distance wireless signal transceiver of the electro-mechanical device 20 of the bicycle 5-1 preferably further transmits the data representative of the geographical position of the bicycle 5-1 to the smartphone 2 (instants t100 and t102, t110 and t112), by means of the short-distance data connection between the bicycle 5-1 and the smartphone 2.

Furthermore, the operation of Figure 8A differs from that of Figure 7A in that the central controller 9 transmits, towards the bicycle 5-1 (instead of towards the smartphone 2), the message indicative of the presence of an out-of-service condition (instant t103) or the message indicative of the absence of the out-of-service condition (instant t112), then the bicycle 5-1 forwards said message indicative of the presence of an out-of-service condition (instant t104) or of absence of the out-of-service condition (instant t113) to the smartphone 2.

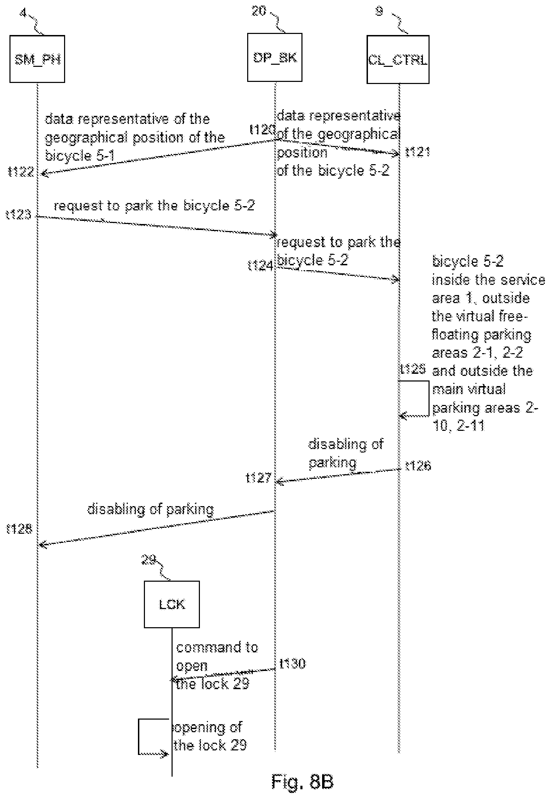

With reference to Figure 8B, it shows the messages exchanged over time in the system 50 to control the position of the shared bicycle 5-2 according to the invention, in the case where the bicycle 5-2 is inside the service area 1, but outside the virtual free-floating or main virtual parking areas, as indicated by the position 5-2-a) of Figure 1A.

The operation of Figure 8B differs from that of Figure 7B in that the smartphone 4 transmits towards the bicycle 5-2 (instead of towards the central controller 9) the parking request message indicative of a request to park the bicycle 5-2 (instant t123), by means of the short-distance data connection between the smartphone 4 and the bicycle 5-2; the long-distance wireless signal transceiver of the electro-mechanical device 20 of the bicycle 5-2 receives the parking request message and forwards it towards the central controller 9 (instant t124), by means of the long-distance data connection between the bicycle 5-2 and the central controller 9.

Furthermore, the operation of the Figure 8B differs from that of Figure 7B in that the central controller 9 transmits towards the bicycle 5-2 (instead of towards the smartphone 4) the parking disabling message (instant t126), then the bicycle 5-2 forwards said parking disabling message to the smartphone 4 (instant t127).

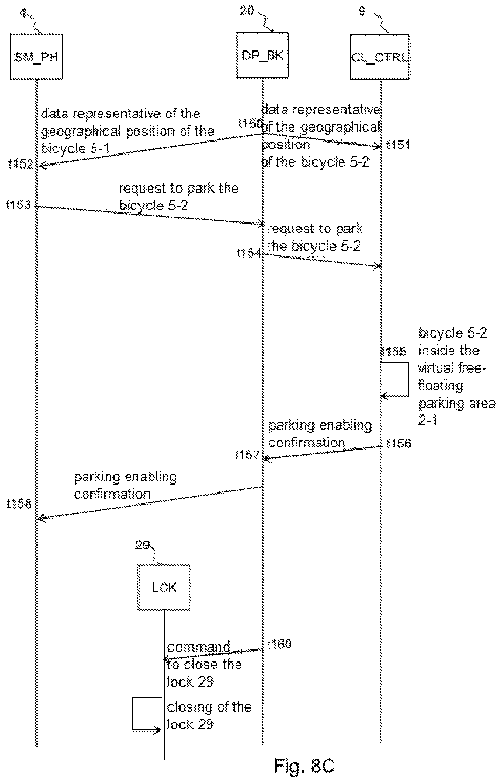

With reference to Figure 8C, it shows the messages exchanged over time in the system 50 to control the position of the shared bicycle 5-2 in the first operating mode (first embodiment of the invention), in the case where the bicycle 5-2 is inside the service area 1 and also inside the virtual free-floating parking area 2-1, as indicated by the position 5-2-b) of Figure 1A.

The operation of Figure 8B differs from that of Figure 7B in that the smartphone 4 transmits the parking request message indicative of a request to park the bicycle 5-2 (instant t153) towards the bicycle 5-2 (instead of towards the central controller 9), by means of the short-distance data connection between the smartphone 4 and the bicycle 5-2; the short-distance wireless signal transceiver 21 of the electro-mechanical device 20 of the bicycle 5-2 receives the parking request message, then the long-distance wireless signal transceiver 22 of the electro-mechanical device 20 transmits said parking request message towards the central controller 9 (instant t154), by means of the long-distance data connection between the bicycle 5-2 and the central controller 9.

Furthermore, the operation of the Figure 8C differs from that of Figure 7C in that the central controller 9 transmits the confirmation message of the enabling of the parking (instant t156) towards the bicycle 5-2 (instead of towards the smartphone 4), then the bicycle 5-2 forwards said confirmation message of the enabling of the parking (instant t127) to the smartphone 4.

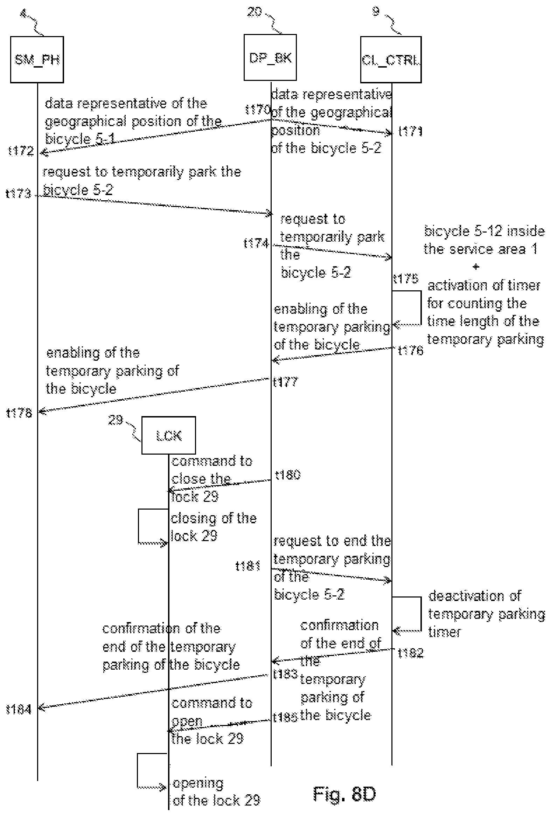

With reference to Figure 8D, it shows the messages exchanged over time in the system 50 to control the position of the shared bicycle 5-12 in the first operating mode (first embodiment of the invention), in the case where the cyclist 7 of the bicycle 5-12 temporarily parks the bicycle 5-12 inside the service area 1, but outside the virtual free-floating parking areas 2-1, 2-2 and outside the main virtual parking areas 2-10, 2-11, as indicated by the position of the bicycle 5-12 in Figure 1A and 1B.

The operation of Figure 8D differs from that of Figure 7D in that the smartphone 4 transmits the temporary parking request message indicative of a request to temporarily park the bicycle 5-2 (instant t173) towards the bicycle 5-2 (instead of towards the central controller 9), by means of the short-distance data connection between the smartphone 4 and the bicycle 5-2; the long-distance wireless signal transceiver of the electro-mechanical device 20 of the bicycle 5-2 receives the temporary parking request message and forwards it towards the central controller 9 (instant t174), by means of the long-distance data connection between the bicycle 5-2 and the central controller 9.

Furthermore, the operation of the Figure 8D differs from that of Figure 7D in that the central controller 9 transmits the temporary parking enabling message (instant t176) towards the bicycle 5-2 (instead of towards the smartphone 4), then the bicycle 5-2 forwards said temporary parking enabling message (instant t183) to the smartphone 4.

In the third operating mode (wherein the long-distance data connection towards the central controller 9 is not available, i.e. only the short-distance wireless data connection is available between the mobile electronic device and the shared bicycle), the control of the position of the shared vehicle is performed by means of the mobile electronic device, which knows the position of the service area 1 and of the main or free-floating virtual parking areas.

Therefore, in the third operating mode the mobile electronic device receives from the shared bicycle the data representative of the geographical position thereof, then the processing unit of the mobile electronic device controls the position of the bicycle relative to the service area 1 and transmits to the shared bicycle the message indicative of the presence or absence of the out-of-service condition.

Furthermore, in the third operating mode the mobile electronic device receives from the shared bicycle the data representative of the geographical position thereof, then the processing unit of the mobile electronic device controls the position of the bicycle relative to the main/free-floating virtual parking areas, then the processing unit of the mobile electronic device enables or inhibits, as a function of said control, the parking/temporary parking of the shared bicycle, similarly to what was previously illustrated in relation to the first and second operating mode.

In the fourth operating mode, wherein the shared bicycle is isolated (i.e. no data connections are available between the shared bicycle and the central controller 9 and the mobile electronic device), the processing unit 23 of the shared bicycle performs a check on the position of the shared bicycle relative to the service area 1 by comparing the data (picked up by means of the geographical tracking device 24) representative of the geographical position thereof and a pre-set map stored in an internal memory of the electro-mechanical device 20, then the processing unit 23 enables or inhibits the parking of the shared bicycle as a function of said comparison.

In the fourth operating mode the cyclist can park the bicycle in any position inside the service area 1: in particular, when the processing unit 23 of the bicycle detects that the bicycle is inside the service area and further detects (by means of suitable sensors) that it is stationary, the processing unit 23 activates a timer for counting the defined time length (for example, equal to 30 seconds) and blocks the movement of the bicycle when the timer for counting the time length has reached a value equal to the defined value of the timer for counting the time length.

According to a preferred embodiment of the invention, the position of the virtual free-floating parking areas 2-1, 2-2 (and/or of the main virtual parking areas 2-10, 2-11) varies dynamically over time, as a function of the number of possible users of the shared vehicle hire service.

In particular, a virtual free-floating parking area 2-1, 2-2 (and/or a main virtual parking area 2-10, 2-11) is created virtually (i.e. by means of a virtual boundary or geofence) in a given geographical area (i.e. the boundary of the virtual parking area substantially coincides with that of the given geographical area) when the number of possible users of the shared vehicle hire service inside said geographical area (and/or in proximity thereto) is sufficiently high (i.e. greater than a certain threshold value), whereas said virtual free-floating parking area 2-1, 2-2 (and/or main virtual parking area 2-10, 2-11) is eliminated when the number of possible users of the shared vehicle hire service inside said area (and/or in proximity thereto) is small (i.e. less than a certain threshold value): in this way the probability that the user of the hire service will find an available shared vehicle in the position he or she is interested in increases further.

For example, the position of a virtual free-floating parking area 2-1, 2-2 (and/or a main virtual parking area 2-10, 2-11) is modified on the basis of temporal criteria.

A first temporal criterion for the dynamic variation of the position of a virtual free-floating parking area (2-1 or 2-2) is the criterion whereby the virtual free-floating parking area changes position as a function of the hours of a day.

For example, a virtual free-floating parking area is positioned in a given geographical area (for example, in proximity to a railway station, for example, within a radius of about 1 km) in the morning (for example, from 6:00 AM to 10:00 AM); however, in the afternoon, in the evening and at night the virtual free-floating parking area is not positioned in proximity to said geographical area (the railway station), but is rather positioned in another geographical area farther away (in the example considered, the virtual free-floating parking area is at least 3 km away from the railway station, for example, it is in proximity to office buildings): this enables workers who travel to their workplace by train to find the maximum availability of shared bicycles in proximity to the station in the morning, so that they can rent them to reach their office from the railway station, and, conversely, it enables workers (at the end of the workday) to find the maximum availability of shared bicycles to return to the station on leaving the office.

A second temporal criterion for the dynamic variation of the position of a virtual free-floating parking area (2-1 or 2-2) is the criterion whereby the virtual free-floating parking area changes position as a function of the weekdays (for example, from Monday to Friday) or working days of the week (for example, working days from Monday to Friday and non-working days Saturday and Sunday).

For example, a virtual free-floating parking area with a large surface area is positioned in proximity to a railway station during weekdays, whereas during non-working days a virtual free-floating parking area with a smaller surface area is positioned in proximity to the railway station and, furthermore, during non-working days a further virtual free-floating parking area is positioned in proximity to the centre of the city: in this way, during weekdays workers will find the maximum availability of shared bicycles in order to be able to reach the office from the railway station, whereas during non-working days tourists will find the maximum availability of shared bicycles in order to be able to visit the centre of a city.

According to another preferred embodiment of the invention, a priority is assigned to the virtual free-floating parking areas 2-1, 2-2 and/or the main virtual parking areas 2-10, 2-11, such as, for example, low priority, medium priority or high priority.

In this case the position of the parking areas is fixed, but the priority value assigned to them varies dynamically.

For example, a virtual free-floating parking area is positioned in proximity to a railway station, wherein the virtual free-floating parking area has a high priority in the morning (for example, from 6:00 AM to 10:00 AM), has a low priority in the later hours of the morning and in the afternoon (for example, from 10:00 AM to 4:00 PM) has a medium priority in the later hours of the afternoon until evening (for example, from 4:00 PM to 9:00 PM) and, finally, has a low priority during the night (for example, from 9.00 PM to 6:00 AM).

The priority can be associated with one of the incentives for a user who uses the bike-sharing service:
- if the user parks in a virtual free-floating parking area having a high priority, the user will be provided with an incentive associated with the service, such as, for example, a credit to be used when next hiring a bike;
- if the user parks in a virtual free-floating parking area having a low priority, the user will not be provided with an incentive associated with the service (i.e. no credit), but will in any case still have the possibility of ending the ride on the bicycle (i.e. it is possible to close the lock 29).

## Claims

1. System (50) to control the position of a plurality of shared vehicles (5-2, 5-12) in a service area (1), the service area comprising at least one virtual free-floating parking area (2-1, 2-2) wherein parking of the plurality of shared vehicles is authorized,
the system comprising a mobile electronic device (3), a central controller (9), an electro-mechanical device (20) mounted on a shared vehicle and means for blocking/unblocking (29, 27) the movement of the shared vehicle as a function of a command signal (S_lk, S_drv_m), wherein the mobile electronic device (3) is configured to transmit (t154, t52), towards the electro-mechanical device (20) or towards the central controller, a request message for parking the shared vehicle
and wherein the central controller (9) is configured to:
- receive data representative of the geographical position of the shared vehicle inside the service area;
- receive, from the electro-mechanical device or from the mobile electronic device, the request message for parking the vehicle;
- verify whether the vehicle is positioned inside the service area and whether it is positioned inside or outside the at least one virtual free-floating parking area;
- in case of detection of the vehicle inside the service area and inside a virtual free-floating parking area, transmit (t156, t53), towards the electro-mechanical device or towards the mobile electronic device, a parking enabling confirmation message indicative of an enabling of the parking of the vehicle inside the virtual free-floating parking area;
- in case of detection of the vehicle inside the service area and outside the at least one virtual free-floating parking area, transmit (t126, t23), towards the electro-mechanical device or towards the mobile electronic device, a parking disabling message indicative of a rejection of the request to park the vehicle outside the at least one virtual free-floating parking area;
and wherein the electro-mechanical device is configured to:
- receive, from the central controller or from the mobile electronic device, the parking enabling confirmation message and generate therefrom the command signal representative of the blocking of the movement of the shared vehicle inside the virtual free-floating parking area;
- receive, from the central controller or from the mobile electronic device, the parking disabling message and generate therefrom the command signal representative of an inhibition of the blocking of the movement of the shared vehicle outside the at least one virtual free-floating parking area;
**characterized by** the system being configured to switch between a first operating mode and a second operating mode, as a function of the availability of a first long distance data connection between the central controller and the shared vehicle and of the availability of a second long distance data connection between the central controller and the mobile electronic device; wherein:
- in the first operating mode wherein the long-distance data connection is available between the central controller and the shared vehicle, the central controller is configured to exchange the parking request message, the parking enabling confirmation message and the parking disabling message directly with the shared vehicle's electro-mechanical device (20);
- in the second operating mode wherein the long-distance data connection is not available between the central controller and the shared vehicle, the central controller is configured to exchange, with the shared vehicle's electro-mechanical device (20), the parking request message, the parking enabling confirmation message and the parking disabling message by crossing the mobile electronic device.

2. Control system according to claim 1, wherein the system is further configured to switch between the first operating mode, the second operating mode, a third operating mode and a fourth operating mode, as a function of the availability of the first long-distance data connection between the central controller and the shared vehicle, the availability of the second long-distance data connection between the central controller and the mobile electronic device and the availability of a short-distance data connection between the mobile electronic device and the shared vehicle.
wherein:
- in the third operating mode wherein the long-distance data connection is not available between the central controller and the shared vehicle, the long-distance data connection is not available between the central controller and the mobile electronic device and the short-distance data connection is available between the mobile electronic device and the shared vehicle, the mobile electronic device comprising a processing unit configured to:
- receive from the bicycle data representative of its geographical position;
- compare the position of the shared vehicle relative to the service area;
- detect, as a function of said comparison, the presence or absence of the out-of-service condition and generate therefrom a signal (S_i_sd) indicative of the presence or absence of the out-of-service condition;
- generate, as a function of the comparison of the position of the shared vehicle with respect to the main virtual and virtual free-floating parking areas, a message representative of the enabling or inhibition of the parking/temporary parking of the shared vehicle;
and wherein in the third operating mode the electro-mechanical device is configured to receive from the mobile electronic device said parking/temporary parking enabling or inhibition message and generate therefrom the command signal for enabling or inhibiting the parking/temporary parking of the shared vehicle;
- in the fourth operating mode wherein the long-distance data connection between the central controller and the shared vehicle, the long-distance data connection between the central controller and the mobile electronic device and the short-distance data connection between the mobile electronic device and the shared vehicle are not available, the electro-mechanical device comprises a memory configured to store data representative of a geographical map within which the service area is defined, the processing unit of the electro-mechanical device of the shared vehicle being configured to:
• receive from the satellite tracking device data representative of its geographical position;
• compare the position of the shared vehicle with respect to the service area;
• detect, as a function of said comparison, that the shared vehicle is inside the service area;
• detect that the shared vehicle is not moving and activate a timer having a defined value;
• detect that the timer has reached the defined value during which the vehicle has remained substantially still and generate therefrom the command signal representative of the blocking of the movement of the shared vehicle.

3. Control system according to any of the previous claims, wherein the central controller (9) is configured to dynamically vary over time the position of at least one virtual free-floating parking area, as a function of the number of possible users of the hire service of the shared vehicle,
the central controller (9) being configured to:
- detect the number of possible users of a hire service of the shared vehicle within a geographical area;
- create a virtual free-floating parking area defined by said geographical area, when it is detected that the number of possible users of a hire service of the shared vehicle within said geographical area is greater than or equal to a threshold value;
- remove said free-floating parking area, when it is detected that the number of possible users of the hire service of the shared vehicle within said virtual free-floating parking area is less than the threshold value.

4. Control system according to claim 3, wherein the central controller (9) is configured to dynamically vary over time the position of at least one virtual free-floating parking area, as a function of a time criterion, in particular as a function of the hours of a same day or as a function of different days.

5. Control system according to any of the previous claims, wherein the mobile electronic device (3) is configured to transmit (t172, t72), towards the electro-mechanical device (20) or towards the central controller, a request message for a temporary parking of the shared vehicle
and wherein the central controller (9) is further configured to:
• receive the request message for the temporary parking of the shared vehicle;
• verify whether the vehicle is positioned inside or outside the service area;
• in case of detection of the vehicle inside the service area, activate a timer for counting the time period of the temporary parking and transmit (t126, t23), towards the electro-mechanical device or towards the mobile electronic device, a temporary parking enabling message indicative of an enabling of the temporary parking of the vehicle inside the service area;
• in the case of detection of the vehicle outside of the service area, transmit, towards the electro-mechanical device or towards the mobile electronic device, a temporary parking disabling message indicative of a rejection of the request to temporary park the vehicle outside of the service area;
and wherein the electro-mechanical device is configured to:
• receive, from the central controller or from the mobile electronic device, the temporary parking disabling message and generate therefrom the command signal representative of an inhibition of the blocking of the movement of the shared vehicle outside the parking area;
• receive, from the central controller or from the mobile electronic device, the temporary parking enabling message and generate therefrom the command signal representative of the blocking of the movement of the shared vehicle inside of the parking area;
and wherein the mobile electronic device (3) is configured to transmit (t181, t80), towards the electro-mechanical device (20) or towards the central controller, a message requesting the end of the temporary parking of the shared vehicle,
and wherein the central controller (9) is further configured to:
• receive the request message of the end of the temporary parking of the shared vehicle;
• deactivate the timer for counting the time period of the temporary parking;
• transmit (t182, t81), towards the electro-mechanical device or towards the mobile electronic device, a confirmation message of the end of the temporary parking of the vehicle,
and wherein the electro-mechanical device is configured to receive, from the central controller or from the mobile electronic device, the confirmation message of the end of the temporary parking and generate therefrom the command signal representative of an unblocking of the movement of the shared vehicle inside the service area.

6. Control system according to claim 1, wherein the central controller is further configured to:
• verify whether the vehicle is inside or outside the service area;
• in case of detection (t101, t2) of the vehicle outside the service area, transmit (t103, t3), towards the electro-mechanical device of the bicycle or towards the mobile electronic device, a message indicative of the presence of an out-of-service condition;
• in case of detection (t111, t10) that the vehicle has returned inside the service area, transmit (t11, t112), towards the electro-mechanical device of the bicycle or towards the mobile electronic device, a message indicative of the absence of the out-of-service condition;
and wherein the electro-mechanical device is configured to:
• receive, from the central controller or from the mobile electronic device, the message indicative of the presence of the out-of-service condition, receive from the mobile electronic device a request for parking or temporary parking the bicycle and reject said parking or temporary parking request;
• receive, from the central controller or from the mobile electronic device, the message indicative of the absence of the out-of-service condition, receive from the mobile electronic device a request for parking or temporary parking the the bicycle and enable the processing of said parking or temporary parking request, so as to generate the command signal for the blocking device to permit once again the blocking of the movement of the shared vehicle inside the service area.

7. Control system according to any of the previous claims, wherein the service area further comprises at least one main virtual free-floating parking area (2-10, 2-11) having a surface area smaller than that of the at least one virtual free-floating parking area, wherein parking of the shared vehicles is also authorized inside the at least one main virtual parking area;
wherein the mobile electronic device (3) is configured to transmit, towards the electro-mechanical device (20) or towards the central controller, a request message for parking the shared vehicle;
and wherein the central controller (9) is configured to:
- receive data representative of the geographical position of the shared vehicle inside the service area;
- receive, from the electro-mechanical device or from the mobile electronic device, the request message for parking the vehicle;
- verify whether the vehicle is positioned inside or outside a main virtual parking area;
- in case of detection of the vehicle inside the service area and inside a main virtual parking area, transmit, towards the electro-mechanical device or towards the mobile electronic device, a parking enabling confirmation message indicative of an enabling of the parking of the vehicle inside the main virtual parking area;
• in case of detection of the vehicle inside the service area and outside the at least one main virtual parking area, transmit, towards the electro-mechanical device or towards the mobile electronic device, the parking disabling message indicative of the rejection of the request to park the vehicle outside the main virtual parking area;
and wherein the electro-mechanical device is configured to:
- receive, from the central controller or from the mobile electronic device, the parking enabling confirmation message and generate therefrom the command signal representative of the blocking of the movement of the shared vehicle inside the main virtual parking area;
- receive, from the central controller or from the mobile electronic device, the parking disabling message and generate therefrom the command signal representative of an inhibition of the blocking of the movement of the shared vehicle outside the at least one main virtual parking area.

8. Control system according to any of the previous claims, wherein
- the mobile electronic device is a smartphone or a tablet;
- the shared vehicle is a bicycle out of a plurality of shared bicycles;
- the electro-mechanical device is mounted in the hub of a wheel of the bicycle, in particular the rear wheel;
- the blocking/unblocking means is an electro-mechanical lock (29) mounted in proximity to a wheel of the bicycle and it is configured to switch, as a function of the value of the command signal (S_lk), between a closed position wherein it blocks the rotation of the bicycle wheel and an open position wherein the rotation of the bicycle wheel is enabled;
and wherein the electro-mechanical device is configured to receive the parking disabling message and generate therefrom the lock command signal representative of an inhibition of the closure of the lock when the bicycle is positioned inside the service area and outside the at least one virtual free-floating parking area.

9. Method (100, 200, 250) for controlling the positions of a plurality of shared vehicles (5-2, 5-12) in a service area (1), the service area comprising at least one virtual free-floating parking area (2-1, 2-2) wherein parking of the plurality of shared vehicles is authorized, the method comprising the steps of:
a0) verifying whether a first long-distance data connection is available between the central controller (9) and the shared vehicle (5-2) and whether a second long-distance data connection is available between the central controller and a mobile electronic device (3);
a)
• in case of availability of the first long-distance data connection, transmitting (t153), from the mobile electronic device (3) towards the shared vehicle, a request message for parking a shared vehicle;
• receiving, at an electro-mechanical device (20) of the shared vehicle (5-2), said parking request message and forwarding it (t154) towards the central controller;
• in case of unavailability of the first long-distance data connection and in case of availability of the second long-distance data connection, transmitting (t52), from the mobile electronic device (3) towards the central controller, said request message for parking the shared vehicle;
b) receiving, at the central controller, the parking request message and data representative of the geographical position of the shared vehicle inside the service area;
c) verifying (t155), at the central controller, whether the vehicle is positioned inside the service area and whether the vehicle is inside or outside the at least one virtual free-floating parking area;
d) in case of detection of the vehicle inside the service area and inside a virtual free-floating parking area:
- in case of availability of the first long-distance data connection:
• transmitting (t156; 122), from the central controller to the electro-mechanical device, a parking enabling confirmation message indicative of an enabling of the parking of the vehicle inside the virtual free-floating parking area;
• receiving (t157), at the electro-mechanical device of the vehicle, the parking enabling confirmation message and blocking the movement of the shared vehicle inside the virtual free-floating parking area;
- in case of unavailability of the first long-distance data connection and in case of availability of the second long-distance data connection:
• transmitting (t53), from the central controller to the mobile electronic device (4), said parking enabling confirmation message indicative of an enabling of the parking of the vehicle inside the virtual free-floating parking area;
• receiving (t54), at the mobile electronic device of the vehicle, said parking enabling confirmation message and forwarding it towards the electro-mechanical device;
• receiving (t55), at the electro-mechanical device of the vehicle, the parking enabling confirmation message and blocking (t56) the movement of the shared vehicle inside the virtual free-floating parking area;
e) in case of detection of the vehicle inside the service area and outside the at least one virtual free-floating parking area:
- in case of availability of the first long-distance data connection:
• transmitting (t126; 106), from the central controller to the electro-mechanical device, a parking disabling message indicative of a rejection of the request to park the vehicle outside the at least one virtual free-floating parking area;
• receiving (t127), at the electro-mechanical device of the vehicle, the parking disabling message and inhibiting (t130) the blocking of the movement of the shared vehicle outside the at least one virtual free-floating parking area;
- in case of unavailability of the first long-distance data connection and in case of availability of the second long-distance data connection:
• transmitting (t23), from the central controller to the mobile electronic device (4), said parking disabling message indicative of a rejection of the request to park the vehicle outside of the at least one the virtual free-floating parking area;
• receiving (t24), at the mobile electronic device (4), said parking disabling message and forwarding it towards the electro-mechanical device;
• receiving (t25), at the electro-mechanical device of the vehicle, the parking disabling message and inhibiting (t26) the blocking of the movement of the shared vehicle inside the virtual free-floating parking area.

10. Method according to claim 8, the method further comprising the steps of:
a1) transmitting (t172, t72; 254), from the mobile electronic device (3) towards the electro-mechanical device (20) or towards the central controller (9), a request message for temporary parking of the shared vehicle;
b1) receiving (108), at the central controller, the temporary parking request message and
data representative of the geographical position of the shared vehicle inside the service area;
c1) verifying, at the central controller, whether the vehicle is positioned inside or outside the service area;
d1) detecting that the vehicle is positioned inside the service area;
d2) activating (110) a timer for counting the time length of the temporary parking and
transmitting (t176, t73), from the central controller to the electro-mechanical device or to the mobile electronic device, a temporary parking enabling message indicative of the enabling of the temporary parking of the vehicle inside the service area;
d3) receiving (t177, t75, 204), at the electro-mechanical device of the vehicle, the temporary parking enabling message and blocking the movement of the shared vehicle inside the service area;
f) transmitting (t181, t80), from the mobile electronic device (3) towards the electro-mechanical device (20) or towards the central controller (9), a message requesting the end of the temporary parking of the vehicle;
g) receiving (112), at the central controller, the message requesting the end of the temporary parking of the vehicle and deactivating (115) the timer for counting the time length of the temporary parking;
h) transmitting (t182, t81; 115), from the central controller to the electro-mechanical device or to the mobile electronic device, a confirmation message of the end of the temporary parking of the vehicle,
i) receiving (t183, t83; 208), at the electro-mechanical device of the vehicle, the confirmation message of the end of the temporary parking and unblocking the movement of the vehicle.

11. Method according to claim 9 or 10, wherein the service area further comprises at least one main virtual parking area (2-10, 2-11) having a surface area smaller than that of the at least one virtual free-floating parking area, wherein parking of the shared vehicles is also authorized inside the at least one main virtual parking area, the method further comprising the steps of:
c2) verifying (107), at the central controller, whether the vehicle is positioned inside the service area and whether the vehicle is positioned inside or outside the at least one main virtual parking area;
d2) in case of detection of the vehicle inside the service area and inside a main virtual parking area:
- transmitting, from the central controller to the electro-mechanical device or to the mobile electronic device, a parking enabling confirmation message indicative of an enabling of the parking of the vehicle inside the main virtual parking area;
- receiving at the vehicle the parking enabling confirmation message and blocking the movement of the shared vehicle inside the main virtual parking area;
e) in case of detection of the vehicle inside the service area and outside the at least one main virtual parking area:
- transmitting, from the central controller to the electro-mechanical device or to the mobile electronic device, a parking disabling message indicative of the rejection of the request to park the vehicle outside the at least one main virtual parking area;
- receiving, at the vehicle, the parking disabling message and inhibiting the blocking of the movement of the shared vehicle outside the at least one main virtual parking area.

12. Method according to any of claims 9 to 11, wherein the shared vehicle is a bicycle out of a plurality of shared bicycles, each bicycle comprising a lock (29) configured to switch between a closed position wherein it blocks the movement of a wheel of the bicycle and an open position wherein the movement of the bicycle wheel is permitted.

## Patentansprüche

1. System (50) zur Steuerung der Position einer Vielzahl von gemeinsam genutzten Fahrzeugen (5-2, 5-12) in einem Dienstbereich (1), wobei der Dienstbereich mindestens einen virtuellen stationsunabhängigen Parkbereich (2-1, 2-2) umfasst, wobei das Parken der Vielzahl von gemeinsam genutzten Fahrzeugen autorisiert ist,
wobei das System eine mobile elektronische Vorrichtung (3), eine zentrale Steuerung (9), eine elektromechanische Vorrichtung (20), die an einem gemeinsam genutzten Fahrzeug montiert ist, und Mittel zum Blockieren/Entblockieren (29, 27) der Bewegung des gemeinsam genutzten Fahrzeugs als Funktion eines Befehlssignals (S_lk, S_drv_m) umfasst,
wobei die mobile elektronische Vorrichtung (3) zum Übertragen (t154, t52) an die elektromechanische Vorrichtung (20) oder an die zentrale Steuerung, eine Anforderungsnachricht zum Parken des gemeinsam genutzten Fahrzeugs konfiguriert ist,
und wobei die zentrale Steuerung (9) konfiguriert ist, um:
- Daten zu empfangen, die für die geografische Position des gemeinsam genutzten Fahrzeugs innerhalb des Dienstbereichs repräsentativ sind;
- von der elektromechanischen Vorrichtung oder von der mobilen elektronischen Vorrichtung die Anforderungsnachricht zum Parken des Fahrzeugs zu empfangen;
- zu überprüfen, ob das Fahrzeug innerhalb des Dienstbereichs positioniert ist und ob es innerhalb oder außerhalb des mindestens einen virtuellen stationsunabhängigen Parkbereiches positioniert ist;
- bei Erfassung des Fahrzeugs innerhalb des Dienstbereichs und innerhalb eines virtuellen stationsunabhängigen Parkbereiches, an die elektromechanische Vorrichtung oder an die mobile elektronische Vorrichtung eine Parkfreigabebestätigungsnachricht zu übertragen (t156, t53), die eine Freigabe zum Parken des Fahrzeugs innerhalb des virtuellen stationsunabhängigen Parkbereiches anzeigt;
- bei Erfassung des Fahrzeugs innerhalb des Dienstbereichs und außerhalb des mindestens einen virtuellen stationsunabhängigen Parkbereiches, an die elektromechanische Vorrichtung oder an die mobile elektronische Vorrichtung eine Parksperrungsnachricht zu übertragen (t126, t23), die eine Ablehnung der Anforderung zum Parken des Fahrzeugs außerhalb des mindestens einen virtuellen stationsunabhängigen Parkbereiches anzeigt; und wobei die elektromechanische Vorrichtung konfiguriert ist, um:
- von der zentralen Steuerung oder von der mobilen elektronischen Vorrichtung die Parkfreigabebestätigungsnachricht zu empfangen und um daraus das Befehlssignal zu erzeugen, das für die Blockierung der Bewegung des gemeinsam genutzten Fahrzeugs innerhalb des virtuellen stationsunabhängigen Parkbereiches repräsentativ ist;
- von der zentralen Steuerung oder von der mobilen elektronischen Vorrichtung die Parksperrungsnachricht zu empfangen und um daraus das Befehlssignal zu erzeugen, das für eine Hemmung der Blockierung der Bewegung des gemeinsam genutzten Fahrzeugs außerhalb des mindestens einen virtuellen stationsunabhängigen Parkbereiches repräsentativ ist;
**dadurch gekennzeichnet, dass** das System konfiguriert ist, um zwischen einem ersten Betriebsmodus und einem zweiten Betriebsmodus umzuschalten, als Funktion der Verfügbarkeit einer ersten Langstreckendatenverbindung zwischen der zentralen Steuerung und dem gemeinsam genutzten Fahrzeug und der Verfügbarkeit von einer zweiten Langstreckendatenverbindung zwischen der zentralen Steuerung und der mobilen elektronischen Vorrichtung;
wobei:
- im ersten Betriebsmodus, in dem die Langstreckendatenverbindung zwischen der zentralen Steuerung und dem gemeinsam genutzten Fahrzeug verfügbar ist, die zentrale Steuerung konfiguriert ist, um die Parkanforderungsnachricht, die Parkfreigabebestätigungsnachricht und die Parksperrungsnachricht direkt mit der elektromechanischen Vorrichtung (20) des gemeinsam genutzten Fahrzeugs auszutauschen;
- im zweiten Betriebsmodus, in dem die Langstreckendatenverbindung zwischen der zentralen Steuerung und dem gemeinsam genutzten Fahrzeug nicht verfügbar ist, die zentrale Steuerung konfiguriert ist, um mit der elektromechanischen Vorrichtung (20) des gemeinsam genutzten Fahrzeugs die Parkanforderungsnachricht, die Parkfreigabebestätigungsnachricht und die Parksperrungsnachricht durch Überqueren der mobilen elektronischen Vorrichtung auszutauschen.

2. Steuerungssystem nach Anspruch 1, wobei das System ferner konfiguriert ist, um zwischen dem ersten Betriebsmodus, dem zweiten Betriebsmodus, einem dritten Betriebsmodus und einem vierten Betriebsmodus als Funktion der Verfügbarkeit der ersten Langstreckendatenverbindung zwischen der zentralen Steuerung und dem gemeinsam genutzten Fahrzeug, der Verfügbarkeit der zweiten Langstreckendatenverbindung zwischen der zentralen Steuerung und der mobilen elektronischen Vorrichtung und der Verfügbarkeit einer Kurzstreckendatenverbindung zwischen der mobilen elektronischen Vorrichtung und dem gemeinsam genutzten Fahrzeug umzuschalten,
wobei:
- im dritten Betriebsmodus, in dem die Langstreckendatenverbindung zwischen der Zentralsteuerung und dem gemeinsam genutzten Fahrzeug nicht verfügbar ist, die Langstreckendatenverbindung zwischen der zentralen Steuerung und der mobilen elektronischen Vorrichtung nicht verfügbar ist und die Kurzstreckendatenverbindung zwischen der mobilen elektronischen Vorrichtung und dem gemeinsam genutzten Fahrzeug verfügbar ist, wobei die mobile elektronische Vorrichtung eine Verarbeitungseinheit umfasst, die konfiguriert ist, um:
- vom Fahrrad Daten zu empfangen, die für dessen geografischen Position repräsentativ sind;
- die Position des gemeinsam genutzten Fahrzeugs relativ zum Dienstbereich zu vergleichen;
- als Funktion des Vergleichs das Vorhandensein oder Nichtvorhandensein des außerbetrieblichen Zustands zu erfassen und daraus ein Signal (S_i_sd) zu erzeugen, das das Vorhandensein oder Nichtvorhandensein des außerbetrieblichen Zustands anzeigt;
- als Funktion des Vergleichs der Position des gemeinsam genutzten Fahrzeugs in Bezug auf den virtuellen Hauptparkbereich und den virtuellen stationsunabhängigen Parkbereich eine Nachricht zu erzeugen, die für die Freigabe oder Hemmung zum Parken / vorübergehenden Parken des gemeinsam genutzten Fahrzeugs repräsentativ ist;
und wobei im dritten Betriebsmodus die elektromechanische Vorrichtung konfiguriert ist, um von der mobilen elektronischen Vorrichtung die Freigabe-oder Hemmungsnachricht zum Parken / vorübergehenden Parken zu empfangen und um daraus das Befehlssignal zum Freigeben oder Hemmen zum Parken / vorübergehenden Parken des gemeinsam genutzten Fahrzeugs zu erzeugen;
- im vierten Betriebsmodus, in dem die Langstreckendatenverbindung zwischen der zentralen Steuerung und dem gemeinsam genutzten Fahrzeug, die Langstreckendatenverbindung zwischen der zentralen Steuerung und der mobilen elektronischen Vorrichtung und die Kurzstreckenverbindung zwischen der mobilen elektronischen Vorrichtung und dem gemeinsam genutzten Fahrzeug nicht verfügbar sind, die elektromechanische Vorrichtung einen Speicher umfasst, der konfiguriert ist, um Daten zu speichern, die für eine geografische Karte repräsentativ sind, innerhalb derer der Dienstbereich definiert ist, wobei die Verarbeitungseinheit der elektromechanischen Vorrichtung des gemeinsam genutzten Fahrzeugs konfiguriert ist, um:
• von der Satelliten-Tracking-Vorrichtung Daten zu empfangen, die für deren geografische Position repräsentativ sind;
• die Position des gemeinsam genutzten Fahrzeugs in Bezug auf den Dienstbereich zu vergleichen;
• als Funktion des Vergleichs zu erfassen, dass sich das gemeinsam genutzte Fahrzeug innerhalb des Dienstbereichs befindet;
• zu erfassen, dass sich das gemeinsame Fahrzeug nicht bewegt und um einen Timer mit einem definierten Wert zu aktivieren;
• zu erfassen, dass der Timer den definierten Wert erreicht hat, während dem das Fahrzeug im Wesentlichen still geblieben ist, und um daraus das Befehlssignal zu erzeugen, das für die Blockierung der Bewegung des gemeinsam genutzten Fahrzeugs repräsentativ ist.

3. Steuerungssystem nach einem der vorhergehenden Ansprüche, wobei die zentrale Steuerung (9) konfiguriert ist, um die Position von mindestens einem virtuellen stationsunabhängigen Parkbereich als Funktion von der Anzahl möglicher Benutzer des Mietdienstes des gemeinsam genutzten Fahrzeugs im Laufe der Zeit dynamisch zu ändern,
wobei die zentrale Steuerung (9) konfiguriert ist, um:
- die Anzahl möglicher Nutzer eines Mietdienstes des gemeinsam genutzten Fahrzeugs innerhalb eines geografischen Gebiets zu erfassen;
- einen virtuellen stationsunabhängigen Parkbereich zu schaffen, der durch das geografische Gebiet definiert ist, wenn erfasst wird, dass die Anzahl möglicher Benutzer eines Mietdienstes des gemeinsam genutzten Fahrzeugs innerhalb des geografischen Gebiets größer oder gleich einem Schwellenwert ist;
- den stationsunabhängigen Parkbereich zu entfernen, wenn erfasst wird, dass die Anzahl möglicher Benutzer des Mietdienstes des gemeinsam genutzten Fahrzeugs innerhalb des virtuellen stationsunabhängigen Parkbereiches kleiner als der Schwellenwert ist.

4. Steuerungssystem nach Anspruch 3, wobei die zentrale Steuerung (9) konfiguriert ist, um die Position von mindestens einem virtuellen stationsunabhängigen Parkbereich als Funktion eines Zeitkriteriums, insbesondere als Funktion der Stunden eines gleichen Tages oder als Funktion von verschiedenen Tagen, dynamisch über die Zeit zu ändern.

5. Steuerungssystem nach einem der vorhergehenden Ansprüche, wobei die mobile elektronische Vorrichtung (3) konfiguriert ist, um an die elektromechanische Vorrichtung (20) oder an die zentrale Steuerung eine Anforderungsnachricht für ein vorübergehendes Parken des gemeinsam genutzten Fahrzeugs zu übertragen (t172, t72), und wobei die zentrale Steuerung (9) ferner konfiguriert ist, um:
• die Anforderungsnachricht für das vorübergehende Parken des gemeinsam genutzten Fahrzeugs zu empfangen;
• zu überprüfen, ob das Fahrzeug innerhalb oder außerhalb des Dienstbereichs positioniert ist;
• bei Erfassung des Fahrzeugs innerhalb des Dienstbereichs, um einen Timer zum Zählen der Zeitdauer des vorübergehenden Parkens zu aktivieren und an die elektromechanische Vorrichtung oder an die mobile elektronische Vorrichtung eine Nachricht zur Freigabe des vorübergehenden Parkens zu übertragen (t126, t23), die eine Freigabe zum vorübergehenden Parken des Fahrzeugs innerhalb des Dienstbereichs anzeigt;
• bei der Erfassung des Fahrzeugs außerhalb des Dienstbereichs, an die elektromechanische Vorrichtung oder an die mobile elektronische Vorrichtung eine Nachricht zur vorübergehenden Parksperrung zu übertragen, die eine Ablehnung der Anforderung zum vorübergehenden Parken des Fahrzeugs außerhalb des Dienstbereichs anzeigt;
und wobei die elektromechanische Vorrichtung konfiguriert ist, um:
• von der zentralen Steuerung oder von der mobilen elektronischen Vorrichtung die Nachricht zur vorübergehenden Parksperrung zu empfangen und um daraus das Befehlssignal zu erzeugen, das für eine Hemmung der Blockierung der Bewegung des gemeinsam genutzten Fahrzeugs außerhalb des mindestens Parkbereiches repräsentativ ist;
• von der zentralen Steuerung oder von der mobilen elektronischen Vorrichtung die Nachricht zur vorübergehenden Parksperrung zu empfangen und um daraus das Befehlssignal zu erzeugen, das für die Blockierung der Bewegung des gemeinsam genutzten Fahrzeugs innerhalb des Parkbereichs repräsentativ ist;
und wobei die mobile elektronische Vorrichtung (3) konfiguriert ist, um an die elektromechanische Vorrichtung (20) oder an die zentrale Steuerung eine Nachricht zu übertragen (t181, t80), die das Ende des vorübergehenden Parkens des gemeinsam genutzten Fahrzeugs anfordert,
und wobei die zentrale Steuerung (9) ferner konfiguriert ist, um:
• die Anforderungsnachricht über das Ende des vorübergehenden Parkens des gemeinsam genutzten Fahrzeugs zu empfangen;
• den Timer zum Zählen der Zeitdauer des vorübergehenden Parkens zu deaktivieren;
• an die elektromechanische Vorrichtung oder an die mobile elektronische Vorrichtung, eine Bestätigungsnachricht über das Ende des vorübergehenden Parkens des Fahrzeugs zu übertragen (t182, t81), und wobei die elektromechanische Vorrichtung konfiguriert ist, um von der zentralen Steuerung oder von der mobilen elektronischen Vorrichtung, die Bestätigungsnachricht über das Ende des vorübergehenden Parkens zu empfangen und um daraus das Befehlssignal zu erzeugen, das für eine Entblockierung der Bewegung des gemeinsam genutzten Fahrzeugs innerhalb des Dienstbereichs repräsentativ ist.

6. Steuerungssystem nach Anspruch 1, wobei die zentrale Steuerung ferner konfiguriert ist, um:
• zu überprüfen, ob sich das Fahrzeug innerhalb oder außerhalb des Dienstbereichs befindet;
• bei Erfassung (t101, t2) des Fahrzeugs außerhalb des Dienstbereichs, eine Nachricht an die elektromechanische Vorrichtung des Fahrrads oder an die mobile elektronische Vorrichtung zu übertragen (t103, t3), die das Vorhandensein eines außerbetrieblichen Zustands anzeigt;
• bei Erfassung (t111, t10), dass das Fahrzeug in den Dienstbereich zurückgekehrt ist, um an die elektromechanische Vorrichtung des Fahrrads oder an die mobile elektronische Vorrichtung eine Nachricht zu übertragen (t11, t112), die das Nichtvorhandensein des außerbetrieblichen Zustands anzeigt;
und wobei die elektromechanische Vorrichtung konfiguriert ist, um:
• von der zentralen Steuerung oder von der mobilen elektronischen Vorrichtung die Nachricht zu empfangen, die das Vorhandensein des außerbetrieblichen Zustands anzeigt, um von der mobilen elektronischen Vorrichtung eine Anforderung zum Parken oder vorübergehenden Parken des Fahrrads zu empfangen und um die Anforderung zum Parken oder vorübergehenden Parken abzulehnen;
• von der zentralen Steuerung oder von der mobilen elektronischen Vorrichtung die Nachricht zu empfangen, die das Nichtvorhandensein des außerbetrieblichen Zustands anzeigt, von der mobilen elektronischen Vorrichtung eine Anforderung zum Parken oder vorübergehenden Parken des Fahrrads zu empfangen und die Verarbeitung der Anforderung zum Parken oder vorübergehenden Parken zu aktivieren, um das Befehlssignal für die Blockierungsvorrichtung zu erzeugen, um die Blockierung der Bewegung des gemeinsam genutzten Fahrzeugs innerhalb des Dienstbereichs erneut zuzulassen.

7. Steuerungssystem nach einem der vorhergehenden Ansprüche, wobei der Dienstbereich ferner mindestens einen virtuellen stationsunabhängigen Hauptparkbereich (2-10, 2-11) mit einer kleineren Oberfläche als der des mindestens einen virtuellen stationsunabhängigen Parkbereiches umfasst, wobei das Parken der gemeinsam genutzten Fahrzeuge auch innerhalb des mindestens einen virtuellen Hauptparkbereichs autorisiert ist;
wobei die mobile elektronische Vorrichtung (3) konfiguriert ist, um an die elektromechanische Vorrichtung (20) oder an die zentrale Steuerung eine Anforderungsnachricht zum Parken des gemeinsam genutzten Fahrzeugs zu übertragen;
und wobei die zentrale Steuerung (9) konfiguriert ist, um:
- Daten zu empfangen, die für die geografische Position des gemeinsam genutzten Fahrzeugs innerhalb des Dienstbereichs repräsentativ sind;
- von der elektromechanischen Vorrichtung oder von der mobilen elektronischen Vorrichtung die Anforderungsnachricht zum Parken des Fahrzeugs zu empfangen;
- zu überprüfen, ob das Fahrzeug innerhalb oder außerhalb eines virtuellen Hauptparkbereiches positioniert ist;
- bei Erfassung des Fahrzeugs innerhalb des Dienstbereichs und innerhalb eines virtuellen Hauptparkbereichs, um an die elektromechanische Vorrichtung oder an die mobile elektronische Vorrichtung eine Parkfreigabebestätigungsnachricht zu übertragen, die eine Freigabe zum Parken des Fahrzeugs innerhalb des virtuellen Hauptparkbereichs anzeigt;
• bei Erfassung des Fahrzeugs innerhalb des Dienstbereichs und außerhalb des mindestens einen virtuellen Hauptparkbereichs, um an die elektromechanische Vorrichtung oder an die mobile elektronische Vorrichtung die Parksperrungsnachricht zu übertragen, die die Ablehnung der Anforderung zum Parken des Fahrzeugs außerhalb des virtuellen Hauptparkbereiches anzeigt;
und wobei die elektromechanische Vorrichtung konfiguriert ist, um:
- von der zentralen Steuerung oder von der mobilen elektronischen Vorrichtung die Parkfreigabebestätigungsnachricht zu empfangen und um daraus das Befehlssignal zu erzeugen, das für die Blockierung der Bewegung des gemeinsam genutzten Fahrzeugs innerhalb des virtuellen Hauptparkbereichs repräsentativ ist;
- von der zentralen Steuerung oder von der mobilen elektronischen Vorrichtung die Parksperrungsnachricht zu empfangen und um daraus das Befehlssignal zu erzeugen, das für eine Hemmung der Blockierung der Bewegung des gemeinsam genutzten Fahrzeugs außerhalb des mindestens einen virtuellen Hauptparkbereichs repräsentativ ist.

8. Steuerungssystem nach einem der vorhergehenden Ansprüche, wobei
- es sich bei der mobilen elektronischen Vorrichtung um ein Smartphone oder um ein Tablet handelt;
- es sich beim gemeinsam genutzten Fahrzeug um ein Fahrrad aus einer Vielzahl von gemeinsam genutzten Fahrrädern handelt;
- die elektromechanische Vorrichtung in der Nabe eines Rades des Fahrrads, insbesondere des Hinterrades, montiert ist;
- das Blockier-/Entblockiermittel ein elektromechanisches Schloss (29) ist, das in der Nähe eines Rades des Fahrrads montiert ist und konfiguriert ist, um als Funktion vom Wert des Befehlssignals (S_lk) zwischen einer geschlossenen Position, in der es die Drehung des Fahrradrads blockiert und eine offene Position, in der die Drehung des Fahrradrads ermöglicht wird, umzuschalten;
und wobei die elektromechanische Vorrichtung konfiguriert ist, um die Parksperrungsnachricht zu empfangen und daraus das Sperrbefehlssignal zu erzeugen, das für eine Hemmung des Schließens des Schlosses repräsentativ ist, wenn das Fahrrad innerhalb des Dienstbereichs und außerhalb des mindestens einen virtuellen stationsunabhängigen Parkbereiches positioniert ist.

9. Verfahren (100, 200, 250) zur Steuerung der Positionen einer Vielzahl von gemeinsam genutzten Fahrzeugen (5-2, 5-12) in einem Dienstbereich (1), wobei der Dienstbereich mindestens einen virtuellen stationsunabhängigen Parkbereich (2-1, 2-2) umfasst, wobei das Parken der Vielzahl von gemeinsam genutzten Fahrzeugen autorisiert ist, wobei das Verfahren die Schritte umfasst, zum:
a0) Überprüfen, ob eine erste Langstreckendatenverbindung zwischen der zentralen Steuerung (9) und dem gemeinsam genutzten Fahrzeug (5-2) verfügbar ist und ob eine zweite Langstreckendatenverbindung zwischen der zentralen Steuerung und einer mobilen elektronischen Vorrichtung (3) verfügbar ist;
a)
• bei Verfügbarkeit der ersten Langstreckendatenverbindung, Übertragen (t153) von der mobilen elektronischen Vorrichtung (3) an das gemeinsam genutzte Fahrzeug, einer Anforderungsnachricht zum Parken eines gemeinsam genutzten Fahrzeugs;
• Empfangen, an einer elektromechanischen Vorrichtung (20) des gemeinsam genutzten Fahrzeugs, der Parkanforderungsnachricht (5-2) und deren Weiterleiten (t154) an die zentrale Steuerung;
• bei Nichtverfügbarkeit der ersten Langstreckendatenverbindung und bei Verfügbarkeit der zweiten Langstreckendatenverbindung, Übertragen (t52), von der mobilen elektronischen Vorrichtung (3) an die zentrale Steuerung, der Anforderungsnachricht zum Parken des gemeinsam genutzten Fahrzeugs;
b) Empfangen, an der zentralen Steuerung, der Anforderungsnachricht zum Parken und von Daten, die für die geografische Position des gemeinsam genutzten Fahrzeugs innerhalb des Dienstbereichs repräsentativ sind;
c) Überprüfen (t155), an der zentralen Steuerung, ob das Fahrzeug innerhalb des Dienstbereichs positioniert ist und ob sich das Fahrzeug innerhalb oder außerhalb des mindestens einen virtuellen stationsunabhängigen Parkbereichs befindet;
d) bei Erfassung des Fahrzeugs innerhalb des Dienstbereichs und innerhalb eines virtuellen stationsunabhängigen Parkbereiches:
- bei Verfügbarkeit der ersten Langstreckendatenverbindung:
• Übertragen (t156; 122), von der zentralen Steuerung an die elektromechanische Vorrichtung, einer Parkfreigabebestätigungsnachricht, die eine Freigabe zum Parken des Fahrzeugs innerhalb des virtuellen stationsunabhängigen Parkbereichs anzeigt;
• Empfangen (t157), an der elektromechanischen Vorrichtung des Fahrzeugs, der Parkfreigabebestätigungsnachricht und Blockieren der Bewegung des gemeinsam genutzten Fahrzeugs innerhalb des virtuellen stationsunabhängigen Parkbereichs;
- bei Nichtverfügbarkeit der ersten Langstreckendatenverbindung und bei Verfügbarkeit der zweiten Langstreckendatenverbindung:
• Übertragen (t53), von der zentralen Steuerung an die mobile elektronische Vorrichtung (4), der Parkfreigabebestätigungsnachricht, die eine Freigabe zum Parken des Fahrzeugs innerhalb des virtuellen stationsunabhängigen Parkbereichs anzeigt;
• Empfangen (t54), an der mobilen elektronischen Vorrichtung des Fahrzeugs, der Parkfreigabebestätigungsnachricht und deren Weiterleiten an die elektromechanische Vorrichtung;
• Empfangen (t55), an der elektromechanischen Vorrichtung des Fahrzeugs, der Parkfreigabebestätigungsnachricht und Blockieren (t56) der Bewegung des gemeinsam genutzten Fahrzeugs innerhalb des virtuellen stationsunabhängigen Parkbereichs;
e) bei Erfassung des Fahrzeugs innerhalb des Dienstbereichs und außerhalb des mindestens einen virtuellen stationsunabhängigen Parkbereiches:
- bei Verfügbarkeit der ersten Langstreckendatenverbindung:
• Übertragen (t126; 106), von der zentralen Steuerung an die elektromechanische Vorrichtung, einer Parksperrungsnachricht, die eine Ablehnung der Anforderung zum Parken des Fahrzeugs außerhalb des mindestens einen virtuellen stationsunabhängigen Parkbereichs anzeigt;
• Empfangen (t127), an der elektromechanischen Vorrichtung des Fahrzeugs, der Parksperrungsnachricht und Hemmen (t130) der Blockierung der Bewegung des gemeinsam genutzten Fahrzeugs außerhalb des mindestens einen virtuellen stationsunabhängigen Parkbereichs;
- bei Nichtverfügbarkeit der ersten Langstreckendatenverbindung und bei Verfügbarkeit der zweiten Langstreckendatenverbindung:
• Übertragen (t23), von der zentralen Steuerung an die mobile elektronische Vorrichtung (4), der Parksperrungsnachricht, die eine Ablehnung der Anforderung zum Parken des Fahrzeugs außerhalb des mindestens einen virtuellen stationsunabhängigen Parkbereichs anzeigt;
• Empfangen (t24), an der mobilen elektronischen Vorrichtung (4), der Parksperrungsnachricht und deren Weiterleiten an die elektromechanische Vorrichtung;
• Empfangen (t25), an der elektromechanischen Vorrichtung des Fahrzeugs, der Parksperrungsnachricht und Hemmen (t26) der Blockierung der Bewegung des gemeinsam genutzten Fahrzeugs innerhalb des virtuellen stationsunabhängigen Parkbereiches.

10. Verfahren nach Anspruch 8, wobei das Verfahren ferner die Schritte umfasst, zum:
a1) Übertragen (t172, t72; 254), von der mobilen elektronischen Vorrichtung (3) an die elektromechanische Vorrichtung (20) oder an die zentrale Steuerung (9), einer Anforderungsnachricht zum vorübergehenden Parken des gemeinsam genutzten Fahrzeugs;
b1) Empfangen (108), an der zentralen Steuerung, der Anforderungsnachricht zum vorübergehenden Parken und von Daten, die für die geografische Position des gemeinsam genutzten Fahrzeugs innerhalb des Dienstbereichs repräsentativ sind;
c1) Überprüfen, an der zentralen Steuerung, ob das Fahrzeug innerhalb oder außerhalb des Dienstbereichs positioniert ist;
d1) Erfassen, dass das Fahrzeug innerhalb des Dienstbereichs positioniert ist;
d2) Aktivieren (110) eines Timers zum Zählen der Zeitdauer des vorübergehenden Parkens und Übertragen (t176, t73), von der zentralen Steuerung an die elektromechanische Vorrichtung oder an die mobile elektronische Vorrichtung, einer Nachricht zur Freigabe des vorübergehenden Parkens, die die Freigabe zum vorübergehenden Parken des Fahrzeugs innerhalb des Dienstbereichs anzeigt;
d3) Empfangen (t177, t75, 204), an der elektromechanischen Vorrichtung des Fahrzeugs, der Freigabenachricht zum vorübergehenden Parken und Blockieren der Bewegung des gemeinsam genutzten Fahrzeugs innerhalb des Dienstbereichs;
f) Übertragen (t181, t80), von der mobilen elektronischen Vorrichtung (3) an die elektromechanische Vorrichtung (20) oder an die zentrale Steuerung (9), einer Nachricht, die das Ende des vorübergehenden Parkens des Fahrzeugs anfordert;
g) Empfangen (112), an der zentralen Steuerung, der Nachricht, die das Ende des vorübergehenden Parkens des Fahrzeugs anfordert, und Deaktivieren (115) des Timers zum Zählen der Zeitdauer des vorübergehenden Parkens;
h) Übertragen (t182, t81; 115), von der zentralen Steuerung an die elektromechanische Vorrichtung oder an die mobile elektronische Vorrichtung, einer Bestätigungsnachricht über das Ende des vorübergehenden Parkens des Fahrzeugs,
i) Empfangen (t183, t83; 208), an der elektromechanischen Vorrichtung des Fahrzeugs, der Bestätigungsnachricht über das Ende des vorübergehenden Parkens und Entblockieren der Bewegung des Fahrzeugs.

11. Verfahren nach Anspruch 9 oder 10, wobei der Dienstbereich ferner mindestens einen virtuellen Hauptparkbereich (2-10, 2-11) mit einer kleineren Oberfläche als der des mindestens einen virtuellen stationsunabhängigen Parkbereiches umfasst, wobei das Parken der gemeinsam genutzten Fahrzeuge auch innerhalb des mindestens einen virtuellen Hauptparkbereichs autorisiert wird, wobei das Verfahren ferner die Schritte umfasst, zum:
c2) Überprüfen (107), an der zentralen Steuerung, ob das Fahrzeug innerhalb des Dienstbereichs positioniert ist und ob das Fahrzeug innerhalb oder außerhalb des mindestens einen virtuellen Hauptparkbereichs positioniert ist;
d2) bei Erfassung des Fahrzeugs innerhalb des Dienstbereichs und innerhalb eines virtuellen Hauptparkbereiches:
- Übertragen, von der zentralen Steuerung an die elektromechanische Vorrichtung oder an die mobile elektronische Vorrichtung, einer Parkfreigabebestätigungsnachricht, die eine Freigabe zum Parken des Fahrzeugs innerhalb des virtuellen Hauptparkbereichs anzeigt;
- Empfangen der Parkfreigabebestätigungsnachricht am Fahrzeug und Blockieren der Bewegung des gemeinsam genutzten Fahrzeugs innerhalb des virtuellen Hauptparkbereichs;
e) bei Erfassung des Fahrzeugs innerhalb des Dienstbereichs und außerhalb des mindestens einen virtuellen Hauptparkbereiches:
- Übertragen, von der zentralen Steuerung an die elektromechanische Vorrichtung oder an die mobile elektronische Vorrichtung, einer Parksperrungsnachricht, die die Ablehnung der Anforderung zum Parken des Fahrzeugs außerhalb des mindestens einen virtuellen Hauptparkbereichs anzeigt;
- Empfangen, am Fahrzeug, der Parksperrungsnachricht und Hemmen der Blockierung der Bewegung des gemeinsam genutzten Fahrzeugs außerhalb des mindestens einen virtuellen Hauptparkbereichs.

12. Verfahren nach einem der Ansprüche 9 bis 11, wobei es sich beim gemeinsam genutzten Fahrzeug um ein Fahrrad aus einer Vielzahl von gemeinsam genutzten Fahrrädern handelt, wobei ein jedes Fahrrad ein Schloss (29) umfasst, das konfiguriert ist, um zwischen einer geschlossenen Position, in der es die Bewegung eines Rades des Fahrrads blockiert, und einer offenen Position, in der die Bewegung des Fahrradrades zugelassen wird, umzuschalten.

## Revendications

1. Système (50) pour contrôler la position d'une pluralité de véhicules partagés (5-2, 5-12) dans une zone de service (1), la zone de service comprenant au moins une zone de stationnement virtuelle sans station (2-1, 2-2) dans laquelle le stationnement de la pluralité de véhicules partagés est autorisé,
le système comprenant un dispositif électronique mobile (3), un contrôleur central (9), un dispositif électromécanique (20) monté sur un véhicule partagé et des moyens pour bloquer/débloquer (29, 27) le mouvement du véhicule partagé en fonction d'un signal de commande (S_lk, S_drv_m),
dans lequel le dispositif électronique mobile (3) est configuré pour transmettre (t154, t52), vers le dispositif électromécanique (20) ou vers le contrôleur central, un message de demande de stationnement du véhicule partagé,
et dans lequel le contrôleur central (9) est configuré pour :
- recevoir des données représentatives de la position géographique du véhicule partagé à l'intérieur de la zone de service ;
- recevoir, à partir du dispositif électromécanique ou du dispositif électronique mobile, le message de demande de stationnement du véhicule ;
- vérifier si le véhicule est positionné à l'intérieur de la zone de service et s'il est positionné à l'intérieur ou à l'extérieur de l'au moins une zone de stationnement virtuelle sans station ;
- en cas de détection du véhicule à l'intérieur de la zone de service et à l'intérieur d'une zone de stationnement virtuelle sans station, transmettre (t156, t53), vers le dispositif électromécanique ou vers le dispositif électronique mobile, un message de confirmation d'autorisation de stationnement indicatif d'une autorisation de stationnement du véhicule à l'intérieur de la zone de stationnement virtuelle sans station ;
- en cas de détection du véhicule à l'intérieur de la zone de service et à l'extérieur de l'au moins une zone de stationnement virtuelle sans station, transmettre (t126, t23), vers le dispositif électromécanique ou vers le dispositif électronique mobile, un message de refus de stationnement indicatif d'un rejet de la demande de stationnement du véhicule à l'extérieur de l'au moins une zone de stationnement virtuelle sans station ;
et dans lequel le dispositif électromécanique est configuré pour :
- recevoir, à partir du contrôleur central ou du dispositif électronique mobile, le message de confirmation d'autorisation de stationnement et générer, à partir de celui-ci, le signal de commande représentatif du blocage du mouvement du véhicule partagé à l'intérieur de la zone de stationnement virtuelle sans station ;
- recevoir, à partir du contrôleur central ou du dispositif électronique mobile, le message de refus de stationnement et générer, à partir de celui-ci, le signal de commande représentatif d'un empêchement du blocage du mouvement du véhicule partagé à l'extérieur de l'au moins une zone de stationnement virtuelle sans station ;
**caractérisé en ce que** le système est configuré pour commuter entre un premier mode de fonctionnement et un second mode de fonctionnement, en fonction de la disponibilité d'une première connexion de données à longue distance entre le contrôleur central et le véhicule partagé et de la disponibilité d'une seconde connexion de données à longue distance entre le contrôleur central et le dispositif électronique mobile ;
dans lequel :
- dans le premier mode de fonctionnement dans lequel la connexion de données à longue distance est disponible entre le contrôleur central et le véhicule partagé, le contrôleur central est configuré pour échanger le message de demande de stationnement, le message de confirmation d'autorisation de stationnement et le message de refus de stationnement directement avec le dispositif électromécanique (20) du véhicule partagé ;
- dans le second mode de fonctionnement dans lequel la connexion de données à longue distance n'est pas disponible entre le contrôleur central et le véhicule partagé, le contrôleur central est configuré pour échanger, avec le dispositif électromécanique (20) du véhicule partagé, le message de demande de stationnement, le message de confirmation d'autorisation de stationnement et le message de refus de stationnement en traversant le dispositif électronique mobile.

2. Système de contrôle selon la revendication 1, dans lequel le système est de plus configuré pour commuter entre le premier mode de fonctionnement, le deuxième mode de fonctionnement, un troisième mode de fonctionnement et un quatrième mode de fonctionnement, en fonction de la disponibilité de la première connexion de données à longue distance entre le contrôleur central et le véhicule partagé, de la disponibilité de la deuxième connexion de données à longue distance entre le contrôleur central et le dispositif électronique mobile et de la disponibilité d'une connexion de données à courte distance entre le dispositif électronique mobile et le véhicule partagé,
dans lequel :
- dans le troisième mode de fonctionnement dans lequel la connexion de données à longue distance n'est pas disponible entre le contrôleur central et le véhicule partagé, la connexion de données à longue distance n'est pas disponible entre le contrôleur central et le dispositif électronique mobile et la connexion de données à courte distance est disponible entre le dispositif électronique mobile et le véhicule partagé, le dispositif électronique mobile comprenant une unité de traitement configurée pour :
- recevoir du vélo des données représentatives de sa position géographique ;
- comparer la position du véhicule partagé par rapport à la zone de service ;
- détecter, en fonction de ladite comparaison, la présence ou l'absence de la condition de mise hors service et générer à partir de celle-ci un signal (S_i_sd) indicatif de la présence ou de l'absence de la condition de mise hors service ;
- générer, en fonction de la comparaison de la position du véhicule partagé par rapport aux zones de stationnement virtuelles principales et virtuelles sans station, un message représentatif de l'autorisation ou de l'empêchement du stationnement/du stationnement temporaire du véhicule partagé ;
et dans lequel, dans le troisième mode de fonctionnement, le dispositif électromécanique est configuré pour recevoir du dispositif électronique mobile ledit message d'autorisation ou d'empêchement du stationnement/du stationnement temporaire et générer, à partir de celui-ci, le signal de commande pour autoriser ou empêcher le stationnement/le stationnement temporaire du véhicule partagé ;
- dans le quatrième mode de fonctionnement dans lequel la connexion de données à longue distance entre le contrôleur central et le véhicule partagé, la connexion de données à longue distance entre le contrôleur central et le dispositif électronique mobile et la connexion de données à courte distance entre le dispositif électronique mobile et le véhicule partagé ne sont pas disponibles, le dispositif électromécanique comprend une mémoire configurée pour stocker des données représentatives d'une carte géographique dans laquelle la zone de service est définie, l'unité de traitement du dispositif électromécanique du véhicule partagé étant configurée pour :
• recevoir du dispositif de localisation par satellite des données représentatives de sa position géographique ;
• comparer la position du véhicule partagé par rapport à la zone de service ;
• détecter, en fonction de ladite comparaison, que le véhicule partagé se trouve à l'intérieur de la zone de service ;
• détecter que le véhicule partagé ne se déplace pas et activer une minuterie ayant une valeur définie ;
• détecter que la minuterie a atteint la valeur définie pendant laquelle le véhicule est resté substantiellement immobile et générer à partir de celle-ci le signal de commande représentatif du blocage du mouvement du véhicule partagé.

3. Système de contrôle selon l'une quelconque des revendications précédentes, dans lequel le contrôleur central (9) est configuré pour faire varier dynamiquement dans le temps la position d'au moins une zone de stationnement virtuelle sans station, en fonction du nombre d'utilisateurs possibles du service de location du véhicule partagé,
le contrôleur central (9) étant configuré pour :
- détecter le nombre d'utilisateurs possibles d'un service de location du véhicule partagé à l'intérieur d'une zone géographique ;
- créer une zone de stationnement virtuelle sans station définie par ladite zone géographique, lorsqu'il est détecté que le nombre d'utilisateurs possibles d'un service de location du véhicule partagé dans ladite zone géographique est supérieur ou égal à une valeur seuil ;
- supprimer ladite zone de stationnement sans station, lorsqu'il est détecté que le nombre d'utilisateurs possibles du service de location du véhicule partagé dans ladite zone de stationnement virtuelle sans station est inférieur à la valeur seuil.

4. Système de contrôle selon la revendication 3, dans lequel le contrôleur central (9) est configuré pour faire varier dynamiquement dans le temps la position d'au moins une zone de stationnement virtuelle sans station, en fonction d'un critère temporel, en particulier en fonction des heures d'un même jour ou en fonction de jours différents.

5. Système de contrôle selon l'une quelconque des revendications précédentes, dans lequel le dispositif électronique mobile (3) est configuré pour transmettre (t172, t72), vers le dispositif électromécanique (20) ou vers le contrôleur central, un message de demande pour un stationnement temporaire du véhicule partagé,
et dans lequel le contrôleur central (9) est de plus configuré pour :
• recevoir le message de demande de stationnement temporaire du véhicule partagé ;
• vérifier si le véhicule est positionné à l'intérieur ou à l'extérieur de la zone de service ;
• en cas de détection du véhicule à l'intérieur de la zone de service, activer une minuterie pour comptabiliser la période de temps du stationnement temporaire et transmettre (t126, t23), vers le dispositif électromécanique ou vers le dispositif électronique mobile, un message d'autorisation de stationnement temporaire indicatif d'une autorisation de stationnement temporaire du véhicule à l'intérieur de la zone de service ;
• dans le cas de la détection du véhicule à l'extérieur de la zone de service, transmettre, vers le dispositif électromécanique ou vers le dispositif électronique mobile, un message de refus de stationnement temporaire indiquant un rejet de la demande de stationnement temporaire du véhicule à l'extérieur de la zone de service ;
et dans lequel le dispositif électromécanique est configuré pour :
• recevoir, à partir du contrôleur central ou du dispositif électronique mobile, le message de refus de stationnement temporaire et générer, à partir de celui-ci, le signal de commande représentatif d'un empêchement du blocage du mouvement du véhicule partagé en dehors de la zone de stationnement ;
• recevoir, du contrôleur central ou du dispositif électronique mobile, le message d'autorisation de stationnement temporaire et générer, à partir de celui-ci, le signal de commande représentatif du blocage du mouvement du véhicule partagé à l'intérieur de la zone de stationnement ;
et dans lequel le dispositif électronique mobile (3) est configuré pour transmettre (t181, t80), vers le dispositif électromécanique (20) ou vers le contrôleur central, un message demandant la fin du stationnement temporaire du véhicule partagé,
et dans lequel le contrôleur central (9) est de plus configuré pour :
• recevoir le message de demande de fin du stationnement temporaire du véhicule partagé ;
• désactiver la minuterie pour comptabiliser la période de temps du stationnement temporaire ;
• transmettre (t182, t81), vers le dispositif électromécanique ou vers le dispositif électronique mobile, un message de confirmation de la fin du stationnement temporaire du véhicule,
et dans lequel le dispositif électromécanique est configuré pour recevoir, du contrôleur central ou du dispositif électronique mobile, le message de confirmation de la fin du stationnement temporaire et générer, à partir de celui-ci, le signal de commande représentatif d'un déblocage du mouvement du véhicule partagé à l'intérieur de la zone de service.

6. Système de contrôle selon la revendication 1, dans lequel le contrôleur central est de plus configuré pour :
• vérifier si le véhicule est à l'intérieur ou à l'extérieur de la zone de service ;
• en cas de détection (t101, t2) du véhicule à l'extérieur de la zone de service, transmettre (t103, t3), vers le dispositif électromécanique du vélo ou vers le dispositif électronique mobile, un message indicatif de la présence d'une condition de mise hors service ;
• en cas de détection (t111, t10) du retour du véhicule à l'intérieur de la zone de service, transmettre (t11, t112), vers le dispositif électromécanique du vélo ou vers le dispositif électronique mobile, un message indicatif de l'absence de la condition de mise hors service ;
et dans lequel le dispositif électromécanique est configuré pour :
• recevoir, à partir du contrôleur central ou du dispositif électronique mobile, le message indicatif de la présence de la condition de mise hors service, recevoir à partir du dispositif électronique mobile une demande de stationnement ou de stationnement temporaire du vélo et rejeter ladite demande de stationnement ou de stationnement temporaire ;
• recevoir, à partir du contrôleur central ou du dispositif électronique mobile, le message indicatif de l'absence de la condition de mise hors service, recevoir à partir du dispositif électronique mobile une demande de stationnement ou de stationnement temporaire du vélo et permettre le traitement de ladite demande de stationnement ou de stationnement temporaire, de manière à générer le signal de commande pour le dispositif de blocage pour permettre à nouveau le blocage du mouvement du véhicule partagé à l'intérieur de la zone de service.

7. Système de contrôle selon l'une quelconque des revendications précédentes, dans lequel la zone de service comprend de plus au moins une zone de stationnement virtuelle principale sans station (2-10, 2-11) ayant une surface inférieure à celle de l'au moins une zone de stationnement virtuelle sans station, dans lequel le stationnement des véhicules partagés est aussi autorisé à l'intérieur de l'au moins une zone de stationnement virtuelle principale ;
dans lequel le dispositif électronique mobile (3) est configuré pour transmettre, vers le dispositif électromécanique (20) ou vers le contrôleur central, un message de demande de stationnement du véhicule partagé ;
et dans lequel le contrôleur central (9) est configuré pour :
- recevoir des données représentatives de la position géographique du véhicule partagé à l'intérieur de la zone de service ;
- recevoir, à partir du dispositif électromécanique ou du dispositif électronique mobile, le message de demande de stationnement du véhicule ;
- vérifier si le véhicule est positionné à l'intérieur ou à l'extérieur d'une zone de stationnement virtuelle principale ;
- en cas de détection du véhicule à l'intérieur de la zone de service et à l'intérieur d'une zone de stationnement virtuelle principale, transmettre, vers le dispositif électromécanique ou vers le dispositif électronique mobile, un message de confirmation d'autorisation de stationnement indicatif de l'autorisation de stationnement du véhicule à l'intérieur de la zone de stationnement virtuelle principale ;
• en cas de détection du véhicule à l'intérieur de la zone de service et à l'extérieur de l'au moins une zone de stationnement virtuelle principale, transmettre, vers le dispositif électromécanique ou vers le dispositif électronique mobile, le message de refus de stationnement indicatif du rejet de la demande de stationnement du véhicule à l'extérieur de la zone de stationnement virtuelle principale ;
et dans lequel le dispositif électromécanique est configuré pour :
- recevoir, du contrôleur central ou du dispositif électronique mobile, le message de confirmation d'autorisation de stationnement et générer, à partir de celui-ci, le signal de commande représentatif du blocage du mouvement du véhicule partagé à l'intérieur de la zone de stationnement virtuelle principale ;
- recevoir, du contrôleur central ou du dispositif électronique mobile, le message de refus de stationnement et générer, à partir de celui-ci, le signal de commande représentatif d'un empêchement du blocage du mouvement du véhicule partagé à l'extérieur de l'au moins une zone de stationnement virtuelle principale.

8. Système de contrôle selon l'une quelconque des revendications précédentes, dans lequel
- le dispositif électronique mobile est un Smartphone ou une tablette ;
- le véhicule partagé est un vélo parmi une pluralité de vélos partagés ;
- le dispositif électromécanique est monté dans le moyeu d'une roue du vélo, en particulier la roue arrière ;
- le moyen de blocage/déblocage est un verrou électromécanique (29) monté à proximité d'une roue du vélo et est configuré pour commuter, en fonction de la valeur du signal de commande (S_lk), entre une position fermée dans laquelle il bloque la rotation de la roue du vélo et une position ouverte dans laquelle la rotation de la roue du vélo est autorisée ;
et dans lequel le dispositif électromécanique est configuré pour recevoir le message de refus de stationnement et générer, à partir de celui-ci, le signal de commande de verrouillage représentatif d'un empêchement de la fermeture du verrou lorsque le vélo est positionné à l'intérieur de la zone de service et à l'extérieur de l'au moins une zone de stationnement virtuelle sans station.

9. Procédé (100, 200, 250) servant à contrôler les positions d'une pluralité de véhicules partagés (5-2, 5-12) dans une zone de service (1), la zone de service comprenant au moins une zone de stationnement virtuelle sans station (2-1, 2-2) dans laquelle le stationnement de la pluralité de véhicules partagés est autorisé, le procédé comprenant les étapes de :
a0) vérifier si une première connexion de données à longue distance est disponible entre le contrôleur central (9) et le véhicule partagé (5-2) et si une deuxième connexion de données à longue distance est disponible entre le contrôleur central et un dispositif électronique mobile (3) ;
a)
• en cas de disponibilité de la première connexion de données à longue distance, transmettre (t153), à partir du dispositif électronique mobile (3) vers le véhicule partagé, un message de demande de stationnement d'un véhicule partagé ;
• recevoir, au niveau d'un dispositif électromécanique (20) du véhicule partagé (5-2), ledit message de demande de stationnement et le réexpédier (t154) vers le contrôleur central ;
• en cas d'indisponibilité de la première connexion de données à longue distance et en cas de disponibilité de la deuxième connexion de données à longue distance, transmettre (t52), à partir du dispositif électronique mobile (3) vers le contrôleur central, ledit message de demande de stationnement du véhicule partagé ;
b) recevoir, au niveau du contrôleur central, le message de demande de stationnement et des données représentatives de la position géographique du véhicule partagé à l'intérieur de la zone de service ;
c) vérifier (t155), au niveau du contrôleur central, si le véhicule est positionné à l'intérieur de la zone de service et si le véhicule est à l'intérieur ou à l'extérieur de l'au moins une zone de stationnement virtuelle sans station ;
d) en cas de détection du véhicule à l'intérieur de la zone de service et à l'intérieur d'une zone de stationnement virtuelle sans station :
- en cas de disponibilité de la première connexion de données à longue distance :
• transmettre (tl56 ; 122), du contrôleur central au dispositif électromécanique, un message de confirmation d'autorisation de stationnement indicatif d'une autorisation du stationnement du véhicule à l'intérieur de la zone de stationnement virtuelle sans station ;
• recevoir (t157), au niveau du dispositif électromécanique du véhicule, le message de confirmation d'autorisation de stationnement et bloquer le mouvement du véhicule partagé à l'intérieur de la zone de stationnement virtuelle sans station ;
- en cas d'indisponibilité de la première connexion de données à longue distance et en cas de disponibilité de la deuxième connexion de données à longue distance :
• transmettre (t53), du contrôleur central au dispositif électronique mobile (4), ledit message de confirmation d'autorisation de stationnement indicatif d'une autorisation de stationnement du véhicule à l'intérieur de la zone de stationnement virtuelle sans station ;
• recevoir (t54), au niveau du dispositif électronique mobile du véhicule, ledit message de confirmation d'autorisation de stationnement et le réexpédier au dispositif électromécanique ;
• recevoir (t55), au niveau du dispositif électromécanique du véhicule, le message de confirmation d'autorisation de stationnement et bloquer (t56) le mouvement du véhicule partagé à l'intérieur de la zone de stationnement virtuelle sans station ;
e) en cas de détection du véhicule à l'intérieur de la zone de service et à l'extérieur de l'au moins une zone de stationnement virtuelle sans station :
- en cas de disponibilité de la première connexion de données longue distance :
• transmettre (t126 ; 106), du contrôleur central au dispositif électromécanique, un message de refus de stationnement indicatif d'un rejet de la demande de stationnement du véhicule à l'extérieur de l'au moins une zone de stationnement virtuelle sans station ;
• recevoir (t127), au niveau du dispositif électromécanique du véhicule, le message de refus de stationnement et empêcher (t130) le blocage du mouvement du véhicule partagé en dehors de l'au moins une zone de stationnement virtuelle sans station ;
- en cas d'indisponibilité de la première connexion de données à longue distance et en cas de disponibilité de la deuxième connexion de données à longue distance :
• transmettre (t23), du contrôleur central au dispositif électronique mobile (4), ledit message de refus de stationnement indiquant un rejet de la demande de stationnement du véhicule en dehors de l'au moins une zone de stationnement virtuelle sans station ;
• recevoir (t24), au niveau du dispositif électronique mobile (4), ledit message de refus de stationnement et le réexpédier vers le dispositif électromécanique ;
• recevoir (t25), au niveau du dispositif électromécanique du véhicule, le message de refus de stationnement et empêcher (t26) le blocage du mouvement du véhicule partagé à l'intérieur de la zone de stationnement virtuelle sans station.

10. Procédé selon la revendication 8, le procédé comprenant de plus les étapes de :
a1) transmettre (t172, t72 ; 254), du dispositif électronique mobile (3) vers le dispositif électromécanique (20) ou vers le contrôleur central (9), un message de demande de stationnement temporaire du véhicule partagé ;
b1) recevoir (108), au niveau du contrôleur central, le message de demande de stationnement temporaire et des données représentatives de la position géographique du véhicule partagé à l'intérieur de la zone de service ;
c1) vérifier, au niveau du contrôleur central, si le véhicule est positionné à l'intérieur ou à l'extérieur de la zone de service ;
d1) détecter que le véhicule est positionné à l'intérieur de la zone de service ;
d2) activer (110) une minuterie pour comptabiliser la durée du stationnement temporaire et transmettre (t176, t73), du contrôleur central au dispositif électromécanique ou au dispositif électronique mobile, un message d'autorisation de stationnement temporaire indiquant l'autorisation du stationnement temporaire du véhicule à l'intérieur de la zone de service ;
d3) recevoir (t177, t75, 204), au niveau du dispositif électromécanique du véhicule, le message d'autorisation de stationnement temporaire et bloquer le mouvement du véhicule partagé à l'intérieur de la zone de service ;
f) transmettre (t181, t80), du dispositif électronique mobile (3) vers le dispositif électromécanique (20) ou vers le contrôleur central (9), un message demandant la fin du stationnement temporaire du véhicule ;
g) recevoir (112), au niveau du contrôleur central, le message demandant la fin du stationnement temporaire du véhicule et désactiver (115) la minuterie pour comptabiliser la durée du stationnement temporaire ;
h) transmettre (t182, t81 ; 115), du contrôleur central au dispositif électromécanique ou au dispositif électronique mobile, un message de confirmation de la fin du stationnement temporaire du véhicule,
i) recevoir (t183, t83 ; 208), au niveau du dispositif électromécanique du véhicule, le message de confirmation de la fin du stationnement temporaire et débloquer le mouvement du véhicule.

11. Procédé selon la revendication 9 ou 10, dans lequel la zone de service comprend de plus au moins une zone de stationnement virtuelle principale (2-10, 2-11) ayant une surface inférieure à celle de l'au moins une zone de stationnement virtuelle sans station, dans lequel le stationnement des véhicules partagés est également autorisé à l'intérieur de l'au moins une zone de stationnement virtuelle principale, le procédé comprenant de plus les étapes de :
c2) vérifier (107), au niveau du contrôleur central, si le véhicule est positionné à l'intérieur de la zone de service et si le véhicule est positionné à l'intérieur ou à l'extérieur de l'au moins une zone de stationnement virtuelle principale ;
d2) en cas de détection du véhicule à l'intérieur de la zone de service et à l'intérieur d'une zone de stationnement virtuelle principale :
- transmettre, du contrôleur central au dispositif électromécanique ou au dispositif électronique mobile, un message de confirmation d'autorisation de stationnement indiquant une autorisation du stationnement du véhicule à l'intérieur de la zone de stationnement virtuelle principale ;
- recevoir au niveau du véhicule le message de confirmation d'autorisation de stationnement et bloquer le mouvement du véhicule partagé à l'intérieur de la zone de stationnement virtuelle principale ;
e) en cas de détection du véhicule à l'intérieur de la zone de service et à l'extérieur de l'au moins une zone de stationnement virtuelle principale :
- transmettre, du contrôleur central au dispositif électromécanique ou au dispositif électronique mobile, un message de refus de stationnement indicatif du rejet de la demande de stationnement du véhicule à l'extérieur de l'au moins une zone de stationnement virtuelle principale ;
- recevoir, au niveau du véhicule, le message de refus de stationnement et empêcher le blocage du mouvement du véhicule partagé à l'extérieur de l'au moins une zone de stationnement virtuelle principale.

12. Procédé selon l'une quelconque des revendications 9 à 11, dans lequel le véhicule partagé est un vélo parmi une pluralité de vélos partagés, chaque vélo comprenant un verrou (29) configuré pour commuter entre une position fermée dans laquelle il bloque le mouvement d'une roue du vélo et une position ouverte dans laquelle le mouvement de la roue du vélo est autorisé.
